(19) **Europäisches Patentamt**

**European Patent Office**

**Office européen des brevets**

(11) **EP 1 266 461 B1**

(12) **EUROPÄISCHE PATENTSCHRIFT**

(45) Veröffentlichungstag und Bekanntmachung des Hinweises auf die Patenterteilung:
**22.09.2004   Patentblatt 2004/39**

(21) Anmeldenummer: **00990567.0**

(22) Anmeldetag: **21.12.2000**

(51) Int Cl.⁷: $H04B\ 1/74$, $H04L\ 1/22$

(86) Internationale Anmeldenummer:
**PCT/DE2000/004584**

(87) Internationale Veröffentlichungsnummer:
**WO 2001/073969 (04.10.2001 Gazette 2001/40)**

(54) **VERFAHREN ZUR ERSATZSCHALTUNG EINES BAUGRUPPENFELDES IN DIGITALEN SYSTEMEN ZUR DATENÜBERTRAGUNG UND ERSATZSCHALTUNG ZUR DURCHFÜHRUNG DES VERFAHRENS**

METHOD FOR CHANGING OVER TO AN EQUIVALENT CIRCUIT OF A SUBASSEMBLY UNIT IN DIGITAL SYSTEMS FOR DATA TRANSMISSION AND AN EQUIVALENT CIRCUIT FOR CARRYING OUT SAID METHOD

PROCEDE DE PASSAGE A UN RESEAU EQUIVALENT D'UN CHAMP DE SOUS-ENSEMBLES DANS DES SYSTEMES NUMERIQUES DE TRANSMISSION DE DONNEES ET RESEAU EQUIVALENT POUR LA MISE EN OEUVRE DUDIT PROCEDE

(84) Benannte Vertragsstaaten:
**DE IT**

(30) Priorität: **24.03.2000   DE 10014633**

(43) Veröffentlichungstag der Anmeldung:
**18.12.2002   Patentblatt 2002/51**

(73) Patentinhaber: **SIEMENS AKTIENGESELLSCHAFT**
**80333 München (DE)**

(72) Erfinder: **DREWS, Wolfgang**
**82194 Gröbenzell (DE)**

(56) Entgegenhaltungen:
**EP-A- 0 789 461          US-A- 4 012 717**
**US-A- 5 706 277**

**Beschreibung**

Die Erfindung betrifft ein Verfahren zur Ersatzschaltung eines zumindest teilweise redundanten Systems zur digitalen Datenübertragung mit einer Baueinheit bestehend aus mindestens zwei Baugruppenfeldern aus jeweils einer gleichen Vielzahl von N Feldbaugruppen und M Interface-Baugruppen, wobei jede Interface-Baugruppe zur Kommunikationskoordination zwischen einem Satz gleicher Feldbaugruppen auf den Baugruppenfeldern und mindestens einer peripheren Funktionseinheit dient, wobei im Falle eines Fehlers auf einem aktiven Baugruppenfeld, genannt Betriebsfeld mit N Betriebsbaugruppen, ersatzweise auf ein anderes fehlerfreies Baugruppenfeld, genannt Ersatzfeld mit N Ersatzbaugruppen, umgeschaltet werden kann.

Außerdem betrifft die Erfindung eine Ersatzschaltung in einem digitalen Datenübertragungssystem mit mindestens zwei Baugruppenfeldern, mit einem Betriebsfeld und mindestens einem Ersatzfeld, wobei jedes Baugruppenfeld aus einer Vielzahl von Feldbaugruppen aufgebaut ist und jede Feldbaugruppe des Betriebsfeldes eine funktionale Entsprechung in dem mindestens einen Ersatzfeld aufweist und mit der Feldbaugruppe des Betriebsfeldes einen Feldbaugruppensatz bildet, weiterhin einer Vielzahl von Interface-Baugruppen, wobei jede Interface-Baugruppe über einen Dateneingang und einen Datenausgang zu peripheren Funktionseinheiten, eine Brücke zur parallelen Übermittlung aller Eingangsdaten an alle Feldbaugruppen des zugeordneten Feldbaugruppensatzes und einen Auswahlschalter (Selektor) zur Bestimmung des Baugruppenfeldes, aus dem die Daten an den Datenausgang der Interface-Baugruppe weitergeleitet wird, verfügt.

Auf die Deutsche Offenlegungsschrift DE 197 05 792 A1, die eine ähnliche optische Ersatzschaltung in einem digitalen Datenübertragungssystem beschreibt, wird verwiesen.

Allgemein bestehen digitale Systeme zur Datenübertragung je nach deren Komplexität aus einer Vielzahl von einzelnen digitalen Baugruppen oder erstrecken sich über mehrere Einschübe hinweg.

Es ist allgemein bekannt, daß aufgrund der hohen Anforderungen an die Zuverlässigkeit dieser Systeme, insbesondere bei hohen Datenübertragungsraten, redundante Ersatzbaugruppen vorgesehen werden, die im Falle eines Ausfalls einer oder mehrerer Betriebsbaugruppen deren Datentransport in sehr kurzer Zeit (ca. 10 ms) übernehmen, so daß von außen gesehen nur eine sehr kurze Unterbrechung des Datenstroms in Erscheinung tritt. Bei einem komplexen Übertragungssystem kann eine Vielzahl von solchen Baugruppen existieren.

In Systemen mittlerer Komplexität, also innerhalb eines Einschubs, wird häufig für jede kritische Baugruppe eine redundante Ersatzbaugruppe vorgesehen, so daß mehrere individuelle Ersatzschaltungen nebeneinander existieren. Dies verursacht einen hohen Aufwand an internen hochbitratigen Signalverbindungen, da sämtliche Ein-/Ausgangssignale zwischen jeder betrachteten Betriebs- und Ersatzbaugruppe und ihrer äußeren Systemumgebung ausgekreuzt werden müssen. Weiterhin ist hierzu ein hoher Steueraufwand in der Hardware und/oder Software erforderlich, da jede individuelle Ersatzschaltung unter hohen Zeitanforderungen getrennt zu steuern ist.

Bei Systemen hoher Komplexität, also über mehrere Einschübe hinweg verteilte Systeme, wird häufig ein ganzes Feld von Baugruppen redundant ausgelegt. Die Ersatzschaltung erfolgt dann jeweils für ein gesamtes Feld und nicht mehr für die individuellen Baugruppen. Hier ist es allgemein bekannt, die Steuerung von einem zentralen Prozessor aus zu übernehmen, wobei das Zeitverhalten der Steuerung bei der Ausführung der Ersatzschaltung zunehmend problematisch wird.

Es ist daher Aufgabe der Erfindung, ein Verfahren zur Durchführung einer Ersatzschaltung und eine Ersatzschaltung anzugeben, deren Integrationsaufwand möglichst gering ist und deren Zeitverhalten möglichst kleine Übergangszeiten bei der Detektion eines Fehlers aufweist.

Die Aufgabe wird durch die beiden unabhängigen Patentansprüche gelöst.

Entsprechend diesem Erfindungsgedanken schlägt der Erfinder ein Verfahren zur Ersatzschaltung eines zumindest teilweise redundanten Systems zur digitalen Datenübertragung mit einer Baueinheit bestehend aus mindestens zwei Baugruppenfeldern aus jeweils einer gleichen Vielzahl von N Feldbaugruppen und M Interface-Baugruppen vor, wobei jede Interface-Baugruppe zur Kommunikationskoordination zwischen einem Satz gleicher Feldbaugruppen auf den Baugruppenfeldern und mindestens einer peripheren Funktionseinheit dient, wobei im Falle eines Fehlers auf einem aktiven Baugruppenfeld, genannt Betriebsfeld mit N Betriebsbaugruppen, ersatzweise auf ein anderes fehlerfreies Baugruppenfeld, genannt Ersatzfeld mit N Ersatzbaugruppen, umgeschaltet werden kann, dahingehend zu verbessern, daß diese Umschaltung durch mindestens ein internes Informationssignal aus der fehlerhaften Betriebsbaugruppe selbst initialisiert wird, wobei das interne Informationssignal an mindestens eine weitere Feldbaugruppe des gleichen Baugruppenfeldes (1 oder 2) propagiert wird.

Hiermit wird es möglich, auf die Ausbildung von individuellen Baugruppenersatzschaltungen für jede einzelne Baugruppe eines Feldes zu verzichten, wodurch man die dazu notwendigen Signalauskreuzungen zwischen benachbarten Baugruppen und den erforderlichen Steuerungsaufwand für eine Vielzahl von unabhängigen Baugruppenersatzschaltungen einspart.

Zur Ablaufsicherung der Ersatzschaltung kann zusätzlich die Umschaltung durch einen zentralen Steuerprozessor überwacht werden.

Eine vorteilhafte Ausgestaltung des Verfahrens sieht vor, daß mindestens zwei Feldbaugruppen eines mit peripheren Funktionseinheiten kommunizierenden Satzes über eine Interface-Baugruppe derart kommunizieren, daß alle Feldbaugruppen dieses Satzes von peripheren Funktionseinheiten ständig Daten empfangen können, und daß im Falle eines Fehlers auf einer Betriebsbaugruppe und mindestens eines funktionsfähigen Ersatzfeldes eine automatische und dezentrale Umschaltung des aktiven Baugruppenfeldes durch alle Interface-Baugruppen auf ein funktionsfähiges Ersatzfeld erfolgt, indem ein Auswahlschalter (=Selektor) in den Interface-Baugruppen betätigt wird.

Eine besondere Ausgestaltung dieses Verfahrens sieht vor, daß das mindestens eine interne Informationssignal ein fehleranzeigendes Informationsbit (=Equipment Defect Indication Bit = EDI-Bit) enthält. Außerdem können in einer besonderen Variante des Verfahrens die Feldbaugruppen ihre Fehlfunktion selbst erkennen und gegebenenfalls das interne Informationssignal und/oder das EDI-Bit selbst erzeugen. Weiterhin kann vorgesehen werden, daß die fehlererkennende Feldbaugruppe das interne Informationssignal und/oder das EDI-Bit an mindestens eine weitere Feldbaugruppe des gleichen Baugruppenfeldes und deren gegebenenfalls vorhandenen Interface-Baugruppe, vorzugsweise alle übrigen Feldbaugruppen des gleichen Baugruppenfeldes und deren Interface-Baugruppen, propagiert.

Vorteilhaft ist es auch, wenn zumindest in einer Feldbaugruppe, vorzugsweise in jeder Feldbaugruppe, durch einen internen Steuerprozessor (FP control) interne Informationssignale über den Fehlerzustand der Feldbaugruppen und/oder mindestens eines Baugruppenfeldes erzeugt und/oder verarbeitet und/oder mit anderen internen Steuerprozessoren (FP control) kommuniziert werden. Hierdurch kann das Zeitverhalten der Ersatzschaltung im Fehlerfalle wesentlich verbessert werden.

Hierbei kann durch den mindestens einen internen Steuerprozessor (FP control) zumindest eines der folgenden interne Informationssignale erzeugt und/oder verarbeitet und/oder mit anderen internen Steuerprozessoren (FP control) kommuniziert werden:

- SF (signal fail), welches den Fehlerzustand des empfangenen/gesendeten Ein-/ Ausgangssignals an einem Port mit den möglichen Werten $\{1, 0\}$ bezeichnet;
- RxEDI (received EDI), welches das empfangene EDI-Bit an einem Port mit den möglichen Werten $\{1, 0\}$ bezeichnet;
- TxEDI (transmitted EDI), welches das gesendete EDI-Bit an einem Port mit den möglichen Werten $\{1, 0\}$ bezeichnet;
- EQF (equipment failure), welches einen internen Fehlerzustand auf der Feldbaugruppe mit den möglichen Werten $\{1, 0\}$ bezeichnet, der durch eine baugruppenspezifische Überwachung unterschiedlicher Ausfallsensoren auf der Feldbaugruppe ermittelt wird;
- CardFail, welches eine Fehlernotifikation an den zentralen Steuerprozessor bezeichnet.

Erfindungsgemäß kann die Fehlerinformation innerhalb eines Baugruppenfeldes durch Setzen eines/des Informationsbits TxE-DI(i) am Port i gemäß der folgenden logischen Oder-Gleichung erfolgen:

$$\text{TxEDI(i)}_{i=1..L} := \cup \{\text{RxEDI(n)}\}_{n=1..L,\, n \neq i} \cup \{\text{SF(n)}\}_{n=1..P} \cup \text{EQF}$$

Außerdem besteht auch die Möglichkeit die Fehlerinformation in Richtung einer Interface-Baugruppe durch Setzen eines/des Informationsbits TxEDI(Q) am Port Q gemäß der folgenden logischen Oder-Gleichung zu übertragen:

$$\text{TxEDI(Q)} := \cup \{\text{RxEDI(n)}\}_{n=1..L} \cup \{\text{SF(n)}\}_{n=1..P,Q} \cup \text{EQF}$$

Weiterhin kann in dem erfindungsgemäßen Verfahren zur Ersatzschaltung der lokale Fehlerzustand CardFail, der mit einer entsprechenden Notifikation an einen zentralen Steuerprozessor gesendet wird, sich gemäß der folgenden logischen Oder-Gleichung bestimmen.

$$\text{CardFail} := \cup\, (\text{SF(n)}\,)_{n=1..P.} \cup \text{EQF}$$

Vorteilhaft kann es bei der Durchführung des erfindungsgemäßen Verfahrens zur Ersatzschaltung außerdem sein, wenn die Interface-Baugruppen eine Funktionseinheit, vorzugsweise einen lokalen Steuerprozessors mit einem Funktionsblock "Selector Control", aufweisen, der die Umschaltung zwischen den einzelnen Baugruppenfeldern im Fehlerfall kontrolliert, wobei aus den eingehenden Informationsbits SF(X), SF(Y), RxEDI(X), RxEDI(Y) und einem SwitchControl-Befehl, vorzugsweise vom zentralen Steuerprozessor, die einzustellende Position des Selektors bestimmt wird.

Zur Bestimmung der einzustellenden Position des Selektors kann die nachfolgende Logikauswahl dienen, wobei ein entsprechender Algorithmus abgearbeitet wird, sobald eine beliebige Änderung des Fehlerzustands, das heißt eine Änderung in einem der Informationsbits SF(X), SF(Y), RxEDI(X) und/oder RxE-DI(Y), festzustellen ist. Der Algorithmus folgt dabei den nachstehenden Regeln:

Falls kein automatisches Umschalten erlaubt ist (Switch-Control=Forced-<X,Y>), wird die vom zentralen Steuerprozessor verlangte Position (X oder Y) des Selektors zwangsweise eingestellt, anderenfalls (SwitchControl=Auto-<X,Y>), wird aufgrund der bestehenden SF- und RxEDI-Zustände nach vier Fällen unterschieden.

Fall a:    Wird kein Fehlerzustand angezeigt, so wird die vom zentralen Steuerprozessor verlangte Vorzugsposition (X oder Y) des Selektors eingestellt.

Fall b:    Wird das Baugruppenfeld X als fehlerhaft und das Baugruppenfeld Y als fehlerfrei angezeigt, wird Position Y des Selektors eingestellt.

Fall c:    Wird das Baugruppenfeld Y als fehlerhaft und das Baugruppenfeld X als fehlerfrei angezeigt, wird Position X des Selektors eingestellt.

Fall d:    Werden beide Baugruppenfelder X und Y als fehlerhaft angezeigt, wird die momentane Position des Selektors beibehalten.

Vorteilhaft für die Sicherheit der ablaufenden Prozesse kann es weiterhin sein, wenn zusätzlich zwischen dem zentralen Steuerprozessor und den einzelnen Feldbaugruppen und Interface-Baugruppen zumindest eines der folgenden internen Informationssignale ausgetauscht werden:

- CardFail, welches eine Fehlernotifikation mit den möglichen Werten {1, 0} von einer Feldbaugruppe an den zentralen Steuerprozessor bezeichnet, mit der ein lokal festgestellter Baugruppenfehler angezeigt wird, der Anlaß zur Auslösung einer Ersatzschaltung ist;
- SwitchIndication, welches eine Notifikation mit den möglichen Werten {Xarray, Yarray} einer Interface-Baugruppe an den zentralen Steuerprozessor bezeichnet, mit der eine erfolgte Umschaltung auf ein anderes Baugruppenfeld angezeigt wird;
- SwitchRequest, welches einen Abfragebefehl des zentralen Steuerprozessors an eine Interface-Baugruppe über deren Schaltzustand bezeichnet, der durch Aussendung des aktuellen Wertes von SwitchIndication an den zentralen Steuerprozessor beantwortet wird;
- SwitchControl, welches einen Steuerparameter mit den möglichen Werten {Forced-X, Forced-Y, Auto-X, Auto-Y} des zentralen Steuerprozessors an eine Interface-Baugruppe bezeichnet, mit dem ein Selektor der Interface-Baugruppe entweder fest auf ein bestimmtes Baugruppenfeld geschaltet werden kann, oder eine bestimmte Vorzugslage des Selektors eingestellt werden kann, mit Erlaubnis zum automatischen Umschalten im Falle eines erkannten Fehlers, wobei die einzelnen Werte bedeuten:

  - Forced-X: Selektor liegt fest auf dem X-Feld, automatische Umschaltung ist nicht möglich;
  - Forced-Y: Selektor liegt fest auf dem Y-Feld, automatische Umschaltung ist nicht möglich;
  - Auto-X: Selektor liegt vorzugsweise auf dem X-Feld, automatische Umschaltung ist möglich;
  - Auto-Y: Selektor liegt vorzugsweise auf Y-Feld, automatische Umschaltung ist möglich.

Die Steuerung der Ersatzschaltung durch den zentralen Steuerprozessor kann vorzugsweise gemäß der nachfolgenden Logikauswahl bestimmt werden, wobei ein hierzu ablaufender Algorithmus sich jeweils nach dem Ablauf eines Halte-Timers wiederholt. Der Algorithmus entscheidet entsprechend den folgenden Fällen:

Fall a:    Wird der fehlerfreie Zustand beider Baugruppenfelder festgestellt, so wird das aktuell selektierte Baugruppenfeld beibehalten und, falls der Halte-Timer abgelaufen ist, das automatische Umschalten durch Switch-Control = Auto-(X|Y) wieder freigegeben;

Fall b:    Wurde ein Fehler in dem selektierten Betriebsfeld festgestellt, so wird vom zentralen Steuerprozessor an alle Interface-Baugruppen ein Schaltbefehl SwitchControl = Forced-(X|Y) zur zwangsweisen Selektion des bisherigen Ersatzfeldes gesendet, weiterhin wird ein Halte-Timer (hold-off timer), vorzugsweise im Minutenbereich, gestartet, der eine zeitliche Hysterese vor einer Möglichkeit einer erneuten Umschaltung sicherstellt, so daß kein schnell oszillierendes Schaltverhalten auftreten kann;

Fall c:    Wurde ein Fehler im Ersatzfeld festgestellt, so wird vom zentralen Steuerprozessor an alle Interface-Baugruppen ein Schaltbefehl SwitchControl = Forced-(X|Y) zur zwangsweisen Selektion des Betriebsfelds gesendet und damit ein Umschalten einzelner Interface-Baugruppen auf das fehlerhafte Ersatzfeld verhindert.

Entsprechend dem Erfindungsgedanken schlägt der Erfinder auch eine Ersatzschaltung in einem digitalen Datenübertragungssystem mit mindestens zwei Baugruppenfeldern, mit einem Betriebsfeld und mindestens einem Ersatzfeld vor, wobei jedes Baugruppenfeld aus einer Vielzahl von Feldbaugruppen aufgebaut ist und jede Feldbaugruppe des Betriebsfeldes eine funktionale Entsprechung in dem mindestens einen Ersatzfeld aufweist und mit der Feldbaugruppe des Betriebsfeldes einen Feldbaugruppensatz bilden, weiterhin einer Vielzahl von Interface-Baugruppen, wobei jede Interface-Baugruppe über einen Dateneingang und einen Datenausgang zu peripheren Funktionseinheiten, eine Brücke zur parallelen Übermittlung aller Eingangsdaten an alle Feldbaugruppen des Feldbaugruppensatzes und einen Auswahlschalter (Selektor) zur Bestimmung des Baugruppenfeldes, aus dem die Daten an den Datenausgang des Interface-Baugruppe weitergeleitet wird, verfügt, dahingehend weiterzuentwickeln, daß jede Feldbaugruppe eines Baugruppenfeldes Mittel zur Fehlerdetektion und zur Fehlerpropagierung zu den restlichen Feldbaugruppen und zu den gegebenenfalls zugeordneten Interface-Baugruppen aufweist.

Vorteilhaft können bei dieser Ersatzschaltung alle Feldbaugruppen und Interface-Baugruppen durch Fehlerpropagierungspfade verbunden sein, wobei die Mittel zur Fehlerdetektion (card supervision) und Fehlerpropagierung (FP control) im Falle eines detektierten Fehlers ein fehleranzeigendes Informationsbit (EDI-Bit) erzeugt und mittelbar oder unmittelbar die anderen Feldbaugruppen seines Feldes informiert.

Weiterhin kann vorteilhaft jede Feldbaugruppe mit einer zugeordneten Interface-Baugruppe ein Mittel zur Betätigung des Selektors ihrer Interface-Baugruppe aufweist, um gegebenenfalls eine Umschaltung des baugruppenfeldseitigen Eingangs der Interface-Baugruppe initialisieren zu können.

Die Ausgestaltung des Datenübertragungssystems kann auf vorteilhafte Weise so ausgeführt sein, daß jedes Baugruppenfeld eine auswechselbare Baueinheit bildet, so daß es ohne besondere Vorkehrung, alleine durch das vorgestellte Ersatzschaltverfahren, möglich wird, funktionsfähige oder zumindest defekte Baugruppenfelder auszuwechseln, ohne den Betrieb des Datenübertragungssystems wesentlich zu stören.

Eine weitere Verbesserung kann dadurch bewirkt werden, daß die Baugruppenfelder und die Interface-Baugruppen eine weitere auswechselbare Baueinheit bildet, die zum Beispiel als separater Einschub ausgeführt ist, der gegebenenfalls über einfache Steckverbindung mit den peripher angeordneten Verbindungen und Funktionseinheiten des Datenübertragungssystems verbunden werden kann.

Erfindungsgemäß können die oben genannten funktionalen Mittel zumindest teilweise durch mindestens ein Programmodul und mindestens einen zugeordneten Prozessor realisiert werden.

Weitere Merkmale der Erfindung ergeben sich aus den Unteransprüchen und der nachfolgenden Beschreibung des Ausführungsbeispiels unter Bezugnahme auf die Zeichnungen.

Im folgenden wird die Erfindung anhand der Zeichnungen näher beschrieben:

Figur 1: Baugruppenfelder mit Interface-Baugruppen;
Figur 2: Fehlerpropagierungsprinzip am Beispiel eines Feldes aus vier Baugruppen;
Figur 3: Fehlerpropagierungsprinzip auf einzelner Baugruppe eines Feldes
Figur 4: Prinzip der Selektorsteuerung auf einer Interface-Baugruppe
Figur 5: Flußdiagramm des lokalen Steuerprozessors einer Interface-Baugruppe
Figur 6: Datenflußdiagramm zur zentralen Steuerung der Ersatzschaltung
Figur 7: Flußdiagramm des zentralen Steuerprozessors

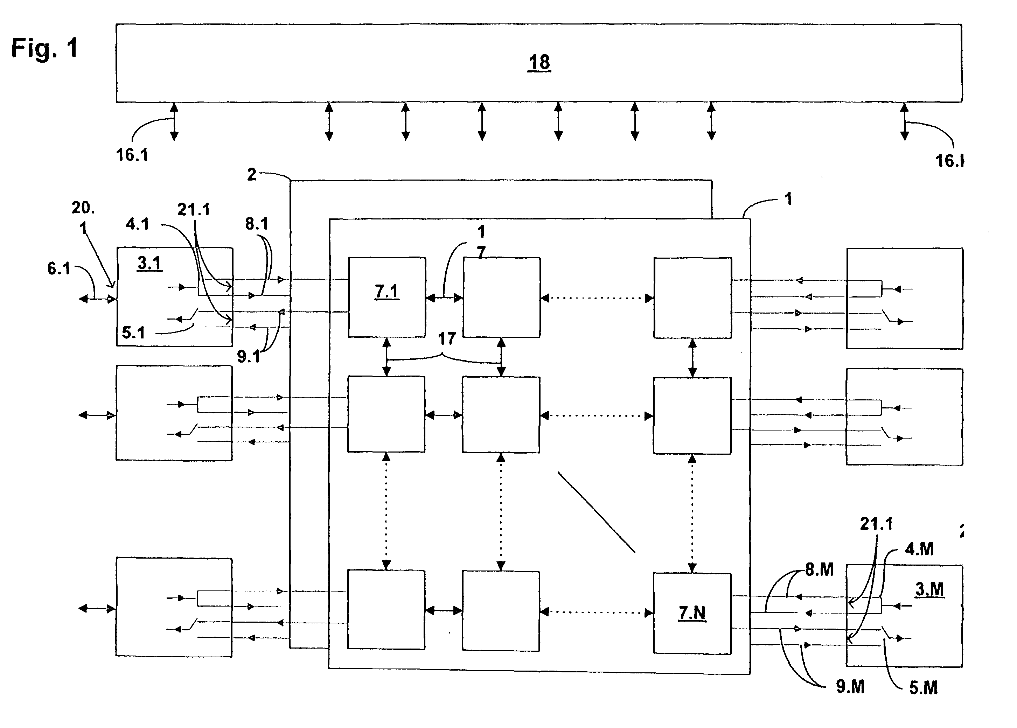

Die Figur 1 zeigt die Systemarchitektur eines erfindungsgemäßen Baugruppenfeldes, bestehend aus einem Betriebsfeld 1, einem Ersatzfeld 2 und N Interface-Baugruppen 3.1 bis 3.M, denen je eine Baugruppe aus dem Betriebsfeld 7.1 bis 7.N (Betriebsbaugruppe) und eine baugleiche, hier nicht dargestellte Baugruppe aus dem Ersatzfeld 2 (Ersatzbaugruppe) zugeordnet sind. Die Eingangs- und Ausgangssignale 6.1 bis 6.N werden über die peripheren Interface-Baugruppen 3.1 bis 3.M den signalverarbeitenden Baugruppen 7.1 bis 7.N im Betriebsfeld 1 und im Ersatzfeld 2 zugeführt.

Jede Interface-Baugruppe 3.1 bis 3.M sendet hierbei ihre Datensignale 8.1 bis 8.M parallel über eine Brücke 4.1 bis 4.M an die mit ihr verbundenen Betriebsbaugruppen 7.1 bis 7.N und die Ersatzbaugruppen, während sie ihre Datensignale ausschließlich entweder von diesen Betriebs- oder Ersatzbaugruppen empfängt. Gesteuert wird diese Auswahl durch einen Auswahlschalter (Selektor) 5.1 bis 5.M, der sich in jeder Interface-Baugruppe 3.1 bis 3.M befindet.

Faßt man jeweils alle Betriebsbaugruppen 7.1 bis 7.N und alle Ersatzbaugruppen zu einem Betriebsfeld 1 und Ersatzfeld 2 und diese wiederum zu einem Baugruppenfeld mit verbindenden Interface-Baugruppen zusammen, so kann man mit dem hier beschriebenen Verfahren eine Ersatzschaltung für das komplette Baugruppenfeld erreichen. Hiermit wird die Notwendigkeit einer individuellen Baugruppenersatzschaltung für jede einzelne Baugruppe eines Feldes vermieden, wodurch man die dazu notwendigen Signalauskreuzungen zwischen benachbarten Baugruppen und den erforderlichen Steuerungsaufwand für eine Vielzahl von unabhängigen Baugruppenersatzschaltungen einspart.

Erfindungsgemäß selektieren alle peripheren Interface-Baugruppen 3.1 bis 3.M ihre internen eingehenden Datensignale 9.1 bis 9.M einheitlich von einem der Baugruppenfelder. Das zu einem Zeitpunkt selektierte Baugruppenfeld wird als Betriebsfeld 1, das jeweils andere Baugruppenfeld als Ersatzfeld 2 definiert. Das jeweilige Ersatzfeld 2 befindet sich in einem Standby-Zustand, bei dem jede einzelne Baugruppe identisch zu der ihr entsprechenden Baugruppe 7.1 bis 7.N im Betriebsfeld 1 konfiguriert ist. Dies wird im vorliegenden Beispiel mit Hilfe eines zentralen Steuerprozessors 18 im System sichergestellt, der über einen Kommunikationsbus, hier angedeutet durch die ein- und ausgehenden Datensignale 16.1 bis 16.K, mit jeder einzelnen Interface-Baugruppe 3.1 bis 3.M sowie mit jeder Baugruppe 7.1 bis 7.N jedes Feldes 1 und 2 verbunden ist.

Im Falle eines Fehlers auf einer beliebigen Baugruppe 7.1 bis 7.N des Betriebsfeldes 1 erfolgt nun eine sehr schnelle automatische Umschaltung aller peripheren Interface-Baugruppen 3.1 bis 3.M auf das Ersatzfeld 2. Diese Umschaltung wird getriggert durch ein fehleranzeigendes Informationsbit, das im folgenden als "Equipment Defect Indication (EDI) Bit" bezeichnet wird. Dieses EDI-Bit wird dabei von der (den) fehlererkennenden Baugruppe(n) selbst erzeugt und über sämtliche anderen Baugruppen eines Betriebsfeldes 1 oder Ersatzfeldes 2 hinweg zu jeder peripheren Interface-Baugruppe 3.1 bis 3.M propagiert. Dieser Mechanismus wird im folgenden als Fehlerpropagierungsverfahren bezeichnet. Hierbei ist lediglich darauf zu achten, daß keine geschlossenen Fehlerpropagierungsschleifen auftreten, so daß es nach dem Verschwinden des ursprünglich erzeugten EDI-Bits zu einem Rücksetzen sämtlicher EDI-Bits innerhalb des Baugruppenfeldes kommt. Das EDI-Bit kann vorzugsweise innerhalb des Signal-Overhead der zwischen den einzelnen Baugruppen übertragenen Signale (In-Band-Signalisierung) eingesetzt werden, hiermit werden keine zusätzlichen Signalleitungen notwendig. Fällt eine dieser Signalleitungen selbst aus, so muß dieses Ereignis auf der (den) verbundenen Baugruppe(n) erkannt werden und dort ein Kriterium zum Setzen des EDI-Bits bilden.

Dieses Konzept ermöglicht eine sehr schnelle Ersatzschaltung für ein großes Baugruppenfeld, denn die gesamte Fehlererkennung und Fehlerpropagierung erfolgt lokal auf den Feldbaugruppen selbst und die sonst übliche Zeitverzögerung durch eine zentrale Steuerung geht nicht in die Umschaltezeit ein. Die Funktion des hier optional noch vorhandenen zentralen Steuerprozessors 18 dient nur noch der Konfiguration und globalen Ablaufsicherstellung der Ersatzschaltungsfunktion.

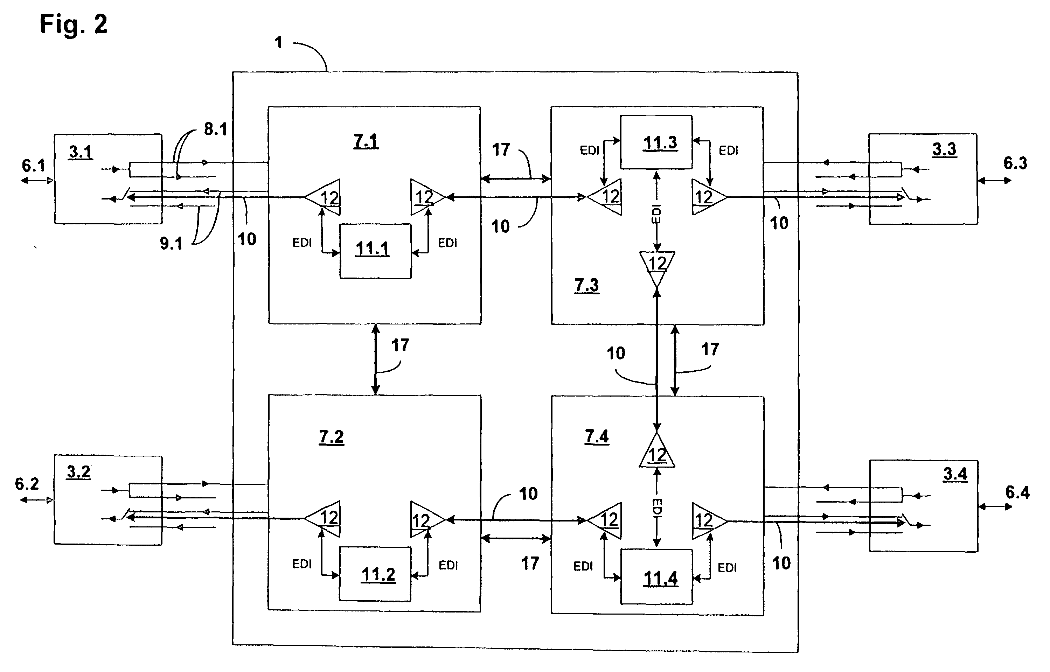

Die Figur 2 zeigt das Prinzip des Fehlerpropagierungsverfahrens anhand eines Betriebsfeldes aus vier Baugruppen 7.1 bis 7.4 mit einer möglichen Ausgestaltung eines schleifenfreien Fehlerpropagierungspfades 10.

Auf jeder Feldbaugruppe 7.1 bis 7.4 befindet sich ein lokaler Steuerprozessor (FP control) 11.1 bis 11.4, der die Erkennung lokaler Fehler sowie die Einsetzung und Propagierung des EDI-Bits entlang des Fehlerpropagierungspfades 10 steuert. Die Dreiecke 12 symbolisieren die Terminierungspunkte des EDI-Bits auf jeder Baugruppe 7.1 bis 7.4. Diese können mit den Terminierungspunkten der Nutzsignale zwischen den Baugruppen eine Einheit bilden (In-Band-Signalisierung von EDI). Wird das EDI-Bit in Richtung einer Interface-Baugruppe 7.1 bis 7.4 gesetzt, so wird auf dieser eine automatische, schnelle Umschaltung des Selektors 5.1 bis 5.4 auf das Nutzsignals der entsprechenden Baugruppe des anderen Baugruppenfeldes ausgelöst. Durch das Fehlerpropagierungsverfahren wird erreicht, daß ein Fehler, der auf einer beliebigen Feldbaugruppe des Betriebsfelds erkannt wird, automatisch durch Setzen des EDI-Bits auf jeder Interface-Baugruppe signalisiert wird und damit automatisch auf sämtlichen Interface-Baugruppen eine Umschaltung auf das jeweilige Ersatzfeld ausgelöst wird.

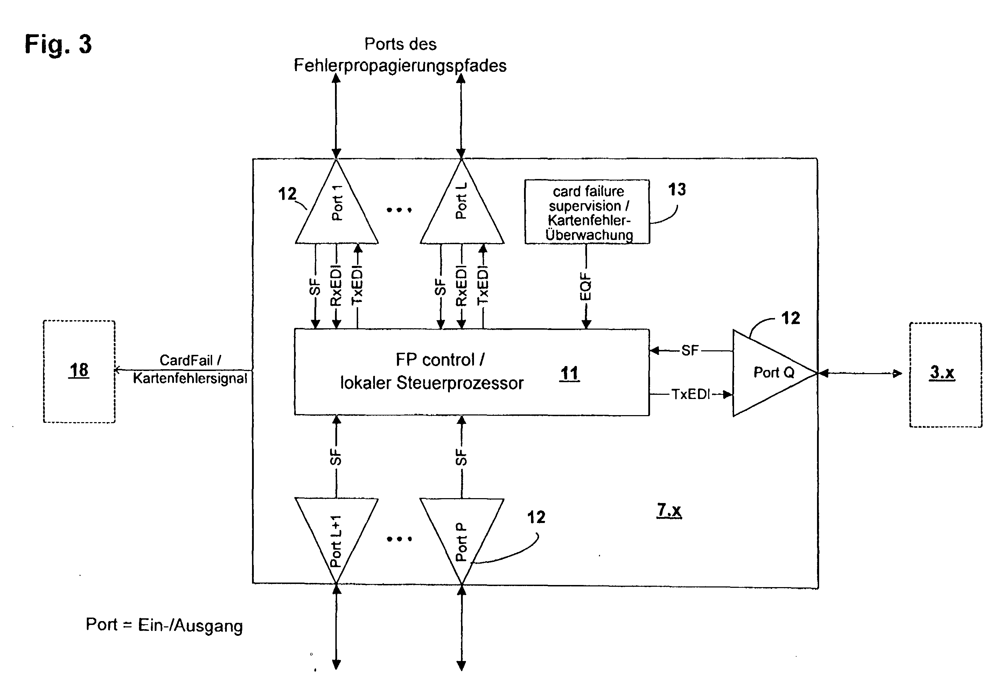

Im folgenden wird der Mechanismus der Fehlererkennung und Fehlerpropagierung auf den Feldbaugruppen anhand der Figur 3 beschrieben, in der die hierzu benötigten Funktionsblöcke dargestellt sind.

Die Signalports Port 1 bis Port L bezeichnen die Terminierungen 12 der äußeren Signalverbindungen entlang des Fehlerpropagierungspfades 10, während die Signalports Port (L+1) bis Port P die Terminierungen 12 aller restlichen nicht zum Fehlerpropagierungspfad 10 gehörigen Signalverbindungen bezeichnen, soweit solche vorhanden sind. Vorzugsweise weist der Fehlerpropagierungspfad 10 hierbei keine geschlossenen Schleifen auf. Der Signalport Port Q bezeichnet eine gegebenenfalls existierende Terminierung 12 einer Signalverbindung zu einer Interface-Baugruppe 3.x.

In diesem Ausführungsbeispiel werden die folgenden Informationsbits vom internen Steuerprozessor (FP control) 11 verarbeitet:

- SF (signal fail) bezeichnet den Fehlerzustand des empfangenen/gesendeten Ein-/Ausgangssignals an einem Port 12 mit den möglichen Werten {1, 0};
- RxEDI bezeichnet das empfangene EDI-Bit an einem Port 12 mit den möglichen Werten {1, 0};
- TxEDI bezeichnet das gesendete EDI-Bit an einem Port 12 mit den möglichen Werten {1, 0};
- EQF (equipment failure) bezeichnet einen internen Fehlerzustand auf der jeweiligen Baugruppe 7.x mit den möglichen Werten {1, 0}, der durch eine baugruppenspezifische Überwachung, resultierend aus dem Funktionsblock 19 "Fehlerüberwachung" = 'card failure supervision', unterschiedlicher Ausfallsensoren auf der Baugruppe ermittelt wird;
- CardFail bezeichnet eine später beschriebene Fehlernotifikation an den zentralen Steuerprozessor 18.

Die eigentliche Fehlerpropagierung innerhalb eines Baugruppenfeldes 1 oder 2, also nicht in Richtung einer Interface-Baugruppe 3.x, erfolgt hierbei durch das Setzen des Informationsbits TxEDI(i) am Port i gemäß der folgenden logischen Oder-Gleichung:

$$TxEDI(i)_{i=1..L} := \cup \{RxEDI(n)\}_{n=1..L, n\neq i} \cup \{SF(n)\}_{n=1..P} \cup EQF$$

Der erste Term $\{RxEDI(n)\}_{n=1..L, n\neq i}$ enthält hierbei die Propagierung der von den einzelnen Ports des Fehlerpropagierungspfades 10 empfangenen EDI-Bits. Die Einsetzung von TxEDI erfolgt unabhängig vom Empfang von RxEDI am gleichen Port, um Rückkopplungsschleifen von EDI zwischen miteinander verbundenen Ports zweier Feldbaugruppen zu vermeiden.

Der zweite Term $\{SF(n)\}_{n=1..P}$ enthält die erkannten Signalfehlerzustände an allen Ports mit Ausnahme des Ports Q, sofern dieser existent ist. Das Fehlen des Anteils SF(Q) ist dadurch begründet, daß ein Ausfall einer Interface-Baugruppe nicht zum Auslösen einer Baugruppenfeld-Ersatzschaltung führen soll, da hierdurch unnötig der Datenverkehr zwischen den noch vorhandenen Interface-Baugruppen (kurzzeitig) gestört werden würde.

Der dritte Term EQF enthält den oben genannten lokalen Fehlerzustand auf der jeweiligen Baugruppe.

Die Fehlerpropagierung in Richtung einer Interface-Baugruppe 3.x erfolgt durch Setzen des Informationsbits TxEDI(Q) am Port Q gemäß der folgenden logischen Oder-Gleichung:

$$TxEDI(Q) := \cup \{RxEDI(n)\}_{n=1..L} \cup \{SF(n)\}_{n=1..P,Q} \cup EQF$$

Für Port Q tragen somit sämtliche RxEDI- und SF-Beiträge zum Einsetzen von TxEDI bei, einschließlich des Signalfehlerzustandes SF(Q) am eigenen Port. Eine Rückkopplungsschleife kann hierdurch nicht entstehen, da eine Interface-Baugruppe 3.x selbst kein TxEDI-Bit in Richtung eines Baugruppenfeldes einsetzt.

Der lokale Fehlerzustand CardFail, der mit der entsprechenden Notifikation an den zentralen Steuerprozessor 18 gesendet wird, bestimmt sich gemäß der folgenden logischen Oder-Gleichung:

$$CardFail := \cup \{SF(n)\}_{n=1..P} \cup EQF$$

Hierzu tragen somit die Signalfehlerzustände an allen Ports mit Ausnahme des Ports Q (sofern existent) sowie der Baugruppenfehlerzustand EQF bei. Das Fehlen des Anteils SF(Q) ist wiederum dadurch begründet, daß ein Ausfall einer Interface-Baugruppe nicht zum Auslösen einer Baugruppenfeld-Ersatzschaltung führen soll.

Mit diesem Prinzip werden alle erkannten Fehler, sowohl die lokal erkannten Fehler als auch die von den Nachbarbaugruppen erkannten Fehler, bis zu den Grenzen des gesamten Baugruppenfeldes an die Interface-Baugruppen propagiert. Um eine dynamisch schnell ablaufende Fehlerpropagierung sicherzustellen, ist eine schnelle Meldung und Verarbeitung aller Fehlerkriterien durch den lokalen Prozessor (FP control) 11.x zweckmäßig.

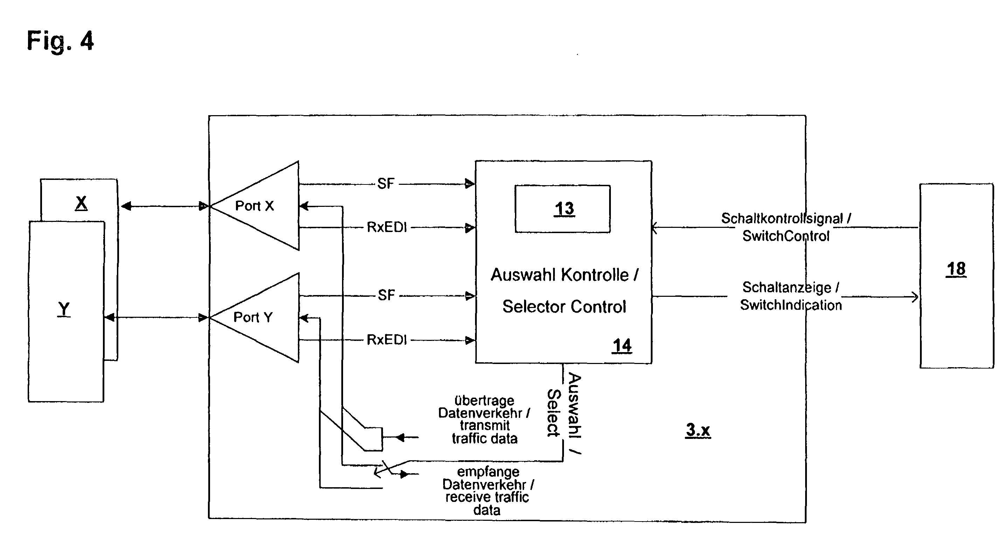

In der Figur 4 sind die Funktionsblöcke für den Mechanismus der Fehlererkennung und Umschaltung auf den Interface-Baugruppen dargestellt.

Die Signalports X und Y bezeichnen die Terminierungen der Signalverbindungen zum jeweiligen Betriebsfeld 1 und Ersatzfeld 2. Die Überwachung der Signalverbindungen liefert hier, analog wie für eine Feldbaugruppe 7.x beschrieben, wiederum einen Fehlerzustand SF mit den möglichen Werten {1, 0}, und RxEDI bezeichnet das an dem jeweiligen Port von der verbundenen Feldbaugruppe empfangene EDI-Bit. Die Interface-Baugruppe 3.x setzt jedoch kein TxEDI in Richtung der verbundenen Feldbaugruppe 7.x ein, da ein Ausfall der Interface-Baugruppe 3.x keine Ersatzschaltung eines Baugruppenfeldes 1 oder 2 auslösen soll. Fällt dagegen ein Verbindungssignal zwischen der Interface-Baugruppe 3.x und der verbundenen Feldbaugruppe 7.x aus, so wird dies durch SF auf der Interface-Baugruppe selbst und/oder RxEDI durch Fehlerpropagierung der verbundenen Feldbaugruppe festgestellt und kann eine Ersatzschaltung auslösen.

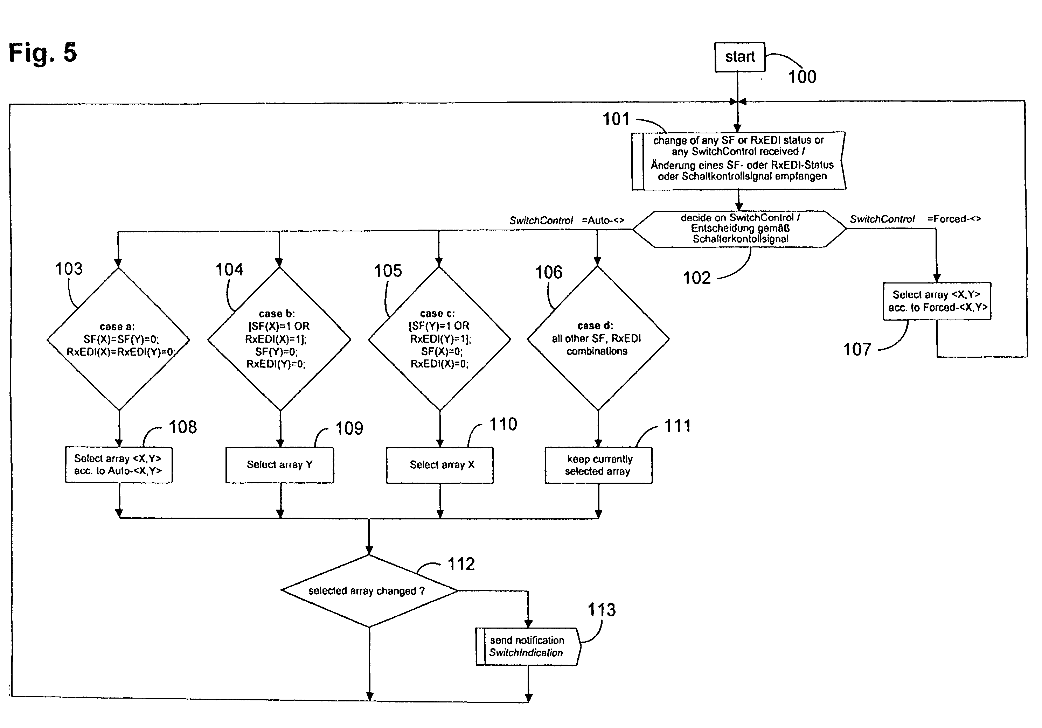

Ein lokaler Steuerprozessor 13 im Funktionsblock "Auswahlschaltersteuerung" (= Selector Control) 14 berechnet aus den Eingangsgrößen SF(X), SF(Y), RxEDI(X), RxEDI(Y) sowie dem SwitchControl-Befehl des zentralen Steuerprozessor 18 die einzustellende Position des Selektors 5.x für die empfangenen Nutzdatenströme der Ports X beziehungsweise Y entsprechend dem in der Figur 5 gezeigten Flußdiagramm. Die zu dieser Figur verwendeten Bezugszeichen verweisen jeweils auf die Aktionssymbole des abgebildeten Flußdiagramms.

Bei 100 wird hier eine beliebige Änderung des Fehlerzustands (SF, RxEDI) festgestellt, so wird der Algorithmus gestartet.

Danach wird bei 101 zunächst festgestellt, ob das automatische Umschalten des Selektors durch den zentralen Steuerprozessor erlaubt ist oder nicht.

Falls kein automatisches Umschalten erlaubt ist (Switch-Control=Forced-<X,Y>) 102, wird die vom zentralen Steuerprozessor 18 verlangte Position (X oder Y) des Selektors zwangsweise eingestellt 107.

Falls ein automatisches Umschalten erlaubt ist (Switch-Control=Auto-<X,Y>), wird aufgrund der bestehenden SF und RxEDI-Zustände nach vier Fällen unterschieden.

Fall a: Wird kein Fehlerzustand angezeigt, so wird nach 103 die vom zentralen Steuerprozessor 18 verlangte Vorzugsposition (X oder Y) des Selektors eingestellt. Falls das bevorzugte Baugruppenfeld nicht bereits vorher ausgewählt war, erfolgt nach 108 hiermit eine automatische Umschaltung.

Fall b: Wird das Baugruppenfeld X als fehlerhaft und das Baugruppenfeld Y als fehlerfrei angezeigt, wird gemäß 104 die Position Y des Selektors eingestellt. Falls Feld Y nicht bereits vorher ausgewählt war, erfolgt nach 109 hiermit eine automatische Umschaltung.

Fall c: Wird das Baugruppenfeld Y als fehlerhaft und das Baugruppenfeld X als fehlerfrei angezeigt, wird gemäß 105 die Position X des Selektors eingestellt. Falls Feld X nicht bereits vorher ausgewählt war, erfolgt nach 110 hiermit eine automatische Umschaltung.

Fall d: Werden beide Baugruppenfelder als fehlerhaft angezeigt, wird gemäß 106 die momentane Position des Selektors beibehalten, es erfolgt also nach 111 keine weitere Umschaltung.

Falls nach 112 eine automatische Umschaltung des Selektors auf der Interface-Baugruppe erfolgt, wird dieses Ereignis nach 113 mit Angabe der aktuellen Selektor-Position durch die Notifikation SwitchIndication dem zentralen Steuerprozessor mitgeteilt.

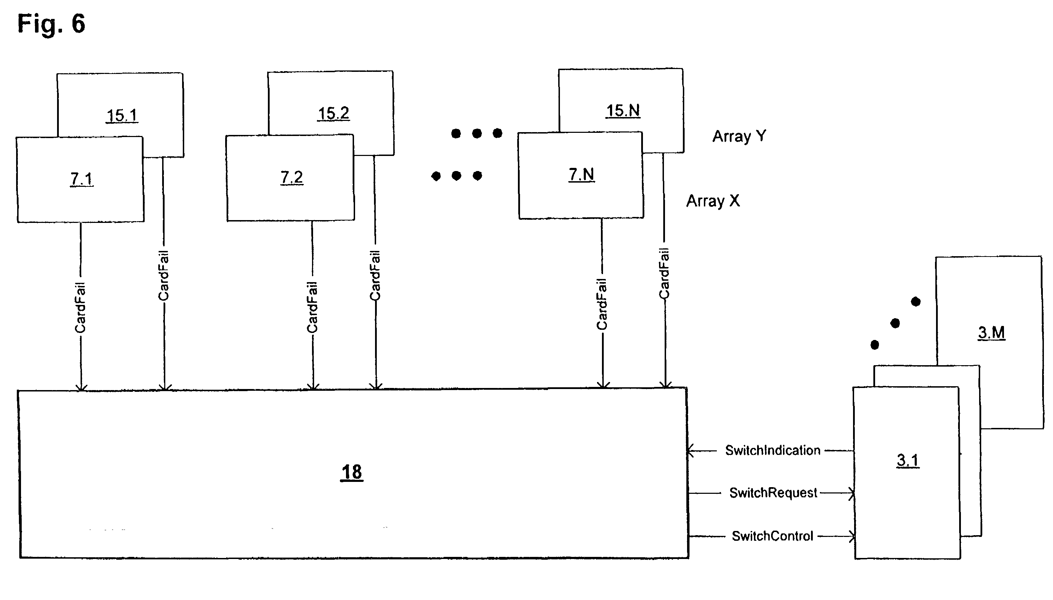

Die Figur 6 zeigt, wie zur Ablaufsicherstellung der Ersatzschaltung zwischen dem zentralen Steuerprozessor 18 und den einzelnen Feldbaugruppen 7.x und 15.x und Interface-Baugruppen 3.x Steuerinformationen ausgetauscht werden können. Hierbei gelten die nachfolgenden Regeln:

- CardFail bezeichnet eine Fehlernotifikation mit den möglichen Werten {1, 0} von einer Feldbaugruppe 7.x, 15.x an den zentralen Steuerprozessor 18, mit der ein lokal festgestellter Baugruppenfehler angezeigt wird, der Anlaß zur Auslösung einer Ersatzschaltung ist. Hiermit kann der zentrale Steuerprozessor 18 ermitteln, welche Baugruppen ausgefallen beziehungsweise verfügbar sind.

- SwitchIndication bezeichnet eine Notifikation mit den möglichen Werten {Xarray, Yarray} einer Interface-Baugruppe 3.x an den zentralen Steuerprozessor 18, mit der eine erfolgte Umschaltung auf ein anderes Baugruppenfeld angezeigt wird. Hiermit kann der zentrale Steuerprozessor 18 den aktuellen Schaltzustand des Selektors 5.x aller Interface-Baugruppen 3.x ermitteln.

- SwitchRequest bezeichnet einen Abfragebefehl des zentralen Steuerprozessors 18 an eine Interface-Baugruppe 3.x über deren Schaltzustand, der durch Aussendung des aktuellen Wertes von SwitchIndication an den zentralen Steuerprozessor 18 beantwortet wird.

- SwitchControl bezeichnet einen Steuerparameter mit den möglichen Werten (Forced-X, Forced-Y, Auto-X, Auto-Y} des zentralen Steuerprozessors 18 an eine Interface-Baugruppe 3.x, mit dem der Selektor 5.x der Interface-Baugruppe 3.x entweder fest auf ein bestimmtes Baugruppenfeld X oder Y geschaltet werden kann, oder eine bestimmte Vorzugslage des Selektors 5.x eingestellt werden kann, mit der Erlaubnis zum automatischen Umschalten im Falle eines erkannten Fehlers. Die einzelnen Werte bedeuten:

  - Forced-X: Selektor 5.x fest auf X-Feld, automatische Umschaltung nicht möglich
  - Forced-Y: Selektor 5.x fest auf Y-Feld, automatische Umschaltung nicht möglich
  - Auto-X: Selektor 5.x vorzugsweise auf X-Feld, automatische Umschaltung möglich
  - Auto-Y: Selektor 5.x vorzugsweise auf Y-Feld, automatische Umschaltung möglich

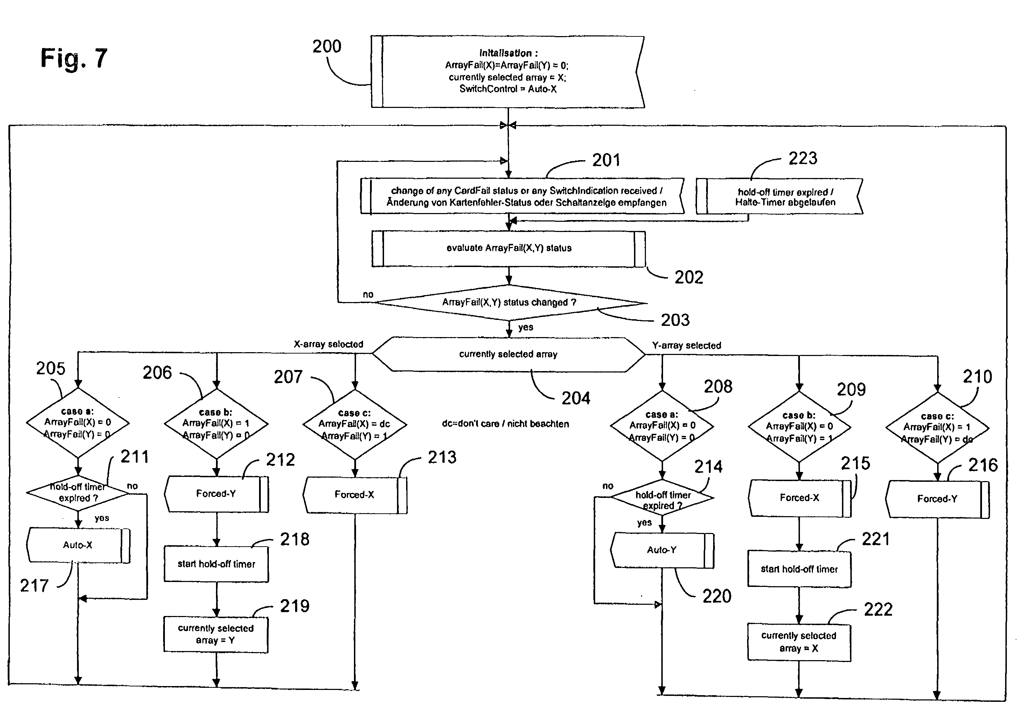

Die Figur 7 zeigt schließlich das nachfolgend beschriebene Flußdiagramm zur Steuerung der Ersatzschaltung durch den zentralen Steuerprozessor. Die zu dieser Figur verwendeten Bezugszeichen verweisen wiederum jeweils auf die Aktionssymbole des abgebildeten Flußdiagramms. Die logischen Variablen ArrayFail(X) und ArrayFail(Y) bezeichnen den Aggregatfehlerzustand des jeweiligen Baugruppenfeldes. Dieser ergibt sich aus der logischen Veroderung der einzelnen Fehlerzustände der jeweiligen Feldbaugruppen (1..N) sowie der Umschalte-Notifikationen der Interface-Baugruppen (1..K). Es gilt also:

$$\text{ArrayFail(X)} := \cup \{\text{CardFail(X,i)}\}_{i=1..N} \cup \{\text{SwitchIndication(i)=Yarray}\}_{i=1..K}$$

$$\text{ArrayFail(Y)} := \cup \{\text{CardFail(Y,i)}\}_{i=1..N} \cup \{\text{SwitchIndication(i)=Xarray}\}_{i=1..K}$$

Bei 200 erfolgt zu Beginn des Ablaufs eine Initialisierung des Steueralgorithmus durch Rücksetzung aller Fehlerzustände auf '0' und Selektion des Feldes X als Betriebsfeld. Die Selektoren auf den Interface-Baugruppen werden dementsprechend durch SwitchControl = 'Auto-X' auf das Feld X geschaltet mit der Möglichkeit zur automatischen Umschaltung.

Bei 201 werden nun ein oder mehrere Fehlerereignis(se) durch CardFail-Notifikation(en) oder SwitchIndication-Notation(en) dem zentralen Steuerprozessor 18 mitgeteilt, so wird der Entscheidungsalgorithmus gestartet und es findet bei 202 zunächst eine Bewertung des Gesamtfehlerzustandes beider Baugruppenfelder gemäß den oben angegebenen logischen Gleichungen statt.

Hat sich der Aggregatfehlerzustand im Vergleich zum vorigen Durchlauf des Algorithmus verändert 203, so wird nach 204 abhängig von dem aktuell selektierten Baugruppenfeld X oder Y reagiert, das heißt der rechte oder linke Entscheidungsbaum gewählt, und eine Entscheidung gemäß den nachfolgenden drei Fallgruppen a, b oder c getroffen.

Fall a: Wird der fehlerfreie Zustand beider Baugruppenfelder gemäß 205 beziehungsweise 208 festgestellt, so wird das aktuell selektierte Baugruppenfeld beibehalten und, gemäß 211 beziehungsweise 214 falls der Halte-Timer abgelaufen ist, das automatische Umschalten durch SwitchControl = Auto-(X|Y) wieder freigegeben 217 beziehungsweise 220.

Fall b: Wurde entsprechend 206 beziehungsweise 209 ein Fehler in dem selektierten Betriebsfeld X beziehungsweise Y festgestellt, so wird nach 212 beziehungsweise 215 vom zentralen Steuerprozessor 18 an alle Interface-Baugruppen 3.x ein Schaltbefehl SwitchControl = Forced-(Y|X) zur zwangsweisen Selektion des bisherigen Ersatzfeldes Y beziehungsweise X gesendet. Dieser Befehl ist im Normalfall zwar nicht zum Umschalten der Interface-Baugruppen 3.x notwendig, da diese in der Regel bereits durch den innerhalb des Baugruppenfeldes wesentlich schneller ablaufenden Fehlerpropagierungs-Mechanismus des EDI-Bits erfolgt, jedoch kann hiermit ein einheitlicher Schaltzustand aller Selektoren des Gesamtsystems sichergestellt und ein Zurückschalten der Interface-Baugruppen bei weiteren Fehlern (oszillierendes Verhalten) zunächst vermieden werden. Weiterhin wird nach 218 beziehungsweise 221 ein Halte-Timer (hold-off timer), vorzugsweise im Minutenbereich, gestartet, der eine zeitliche Hysterese vor einer Möglichkeit einer erneuten Umschaltung sicherstellt, so daß kein schnell oszillierendes Schaltverhalten auftreten kann. Außerdem kann gemäß 219 beziehungsweise 222 dem zentralen Steuerprozessor 18 der aktuelle Schaltzustand mitgeteilt werden.

Fall c: Wurde gemäß 207 beziehungsweise 210 ein Fehler im Ersatzfeld festgestellt, so wird nach 213 beziehungsweise 216 vom zentralen Steuerprozessor 18 an alle Interface-Baugruppen 3.1 bis 3.M ein Schaltbefehl SwitchControl = Forced-(X|Y) zur zwangsweisen Selektion des Betriebsfelds gesendet und damit ein Umschalten einzelner Interface-Baugruppen auf das fehlerhafte Ersatzfeld verhindert.

Schließlich wird gemäß 223 bei Ablauf eines Halte-Timers der gesamte Algorithmus ebenfalls durchlaufen.

Das hier dargestellte Verfahren zeigt beispielhaft eine konkrete Realisierung der Erfindung für ein einfach redundantes System, jedoch kann die Erfindung sinngemäß auch für mehrfach redundante Systeme verwendet werden, wobei lediglich zusätzlich eine Auswahl unter den gegebenenfalls mehrfach zur Verfügung stehenden Ersatzfeldern getroffen werden muß, wobei ein als fehlerhaft detektiertes Feld nicht mehr als Ersatzfeld zur Verfügung steht.

Durch das erfindungsgemäße oben dargestellte Ersatzschaltverfahren und die Ersatzschaltung selbst wird also erreicht, daß der Integrationsaufwand solcher Ersatzschaltungen sehr gering gehalten werden kann und auch das Zeitverhalten der Ersatzschaltung sehr kleine Übergangszeiten bei der Detektion eines Fehlers ermöglicht.

Es versteht sich weiterhin, daß die vorstehend genannten Merkmale der Erfindung, insbesondere deren einzelne Verfahrens- und Entscheidungsschritte nicht nur in der jeweils angegebenen Kombination, sondern auch in anderen Kombinationen oder in Alleinstellung verwendbar sind.

Bezugszeichenliste

| | |
|---|---|
| 1 | Betriebsfeld |
| 2 | Ersatzfeld |
| 3.1 ... 3.M | Interface-Baugruppen |
| 4.1 ... 4.M | Brücken |
| 5.1 ... 5.M | Auswahlschalter / Selektor |
| 6.1 ... 6.N | Ein-/Ausgangssignale aus Interface-Baugruppen |
| 7.1 ... 7.N | Betriebsbaugruppen |
| 8.1 ... 8.M | Datensignale von Interface zu Baugruppe |
| 9.1 ... 9.M | Datensignale von Baugruppe zu Interface |
| 10 | Fehlerpropagierungspfad |
| 11, 11.1 ... 11.N | lokaler Steuerprozessor / FP control |
| 12 | Terminierung |
| 13 | Steuerprozessor |

| 14 | Funktionsblock "Selector control" |
| 15.1 ... 15.N | Ersatzbaugruppen |
| 16.1 ... 16.K | Datensignale im Kommunikationsbus |
| 17 | Datenkommunikation zwischen Baugruppen |
| 18 | zentraler Steuerprozessor |
| 19 | Funktionsblock "Fehlerüberwachung" |
| 20.1-20.M | peripherieseitiger Datenein- und -ausgang |
| 21.1-21.M | baugruppenseitiger Datenein- und -ausgang |
| 100 ... 113 | Aktionssymbole |
| 200 ... 223 | Aktionssymbole |

**Patentansprüche**

1. Verfahren zur Ersatzschaltung eines zumindest teilweise redundanten Systems zur digitalen Datenübertragung mit einer Baueinheit bestehend aus mindestens zwei Baugruppenfeldern (1, 2) aus jeweils einer gleichen Vielzahl von N Feldbaugruppen (7.1-7.N, 15.1-15.N) und M Interface-Baugruppen (3.1-3.M), wobei jede Interface-Baugruppe (3.1-3.M) zur Kommunikationskoordination zwischen einem Satz gleicher Feldbaugruppen (7.1, 15.1 bis 7.N, 15.N) auf den Baugruppenfeldern (1, 2) und mindestens einer peripheren Funktionseinheit dient, wobei im Falle eines Fehlers auf einer aktiven Baugruppenfeld, genannt Betriebsfeld (1) mit N Betriebsbaugruppen (7.1-7.N), ersatzweise auf ein anderes fehlerfreies Baugruppenfeld, genannt Ersatzfeld (2) mit N Ersatzbaugruppen (15.1-15.N), umgeschaltet werden kann, **dadurch gekennzeichnet, daß** diese Umschaltung durch mindestens ein internes Informationssignal aus der fehlerhaften Betriebsbaugruppe (7.1-7.N) selbst initialisiert wird, wobei das interne Informationssignal an mindestens eine weitere Feldbaugruppe des gleichen Baugruppenfeldes (1 oder 2) propagiert wird.

2. Verfahren zur Ersatzschaltung gemäß dem voranstehenden Anspruch 1, **dadurch gekennzeichnet, daß** zur Ablaufsicherung zusätzlich ein zentraler Steuerprozessor (18) die Umschaltung der Baugruppenfelder (1, 2) überwacht.

3. Verfahren zur Ersatzschaltung gemäß einem der voranstehenden Ansprüche 1 bis 2, **dadurch gekennzeichnet, daß** mindestens zwei Feldbaugruppen eines mit peripheren Funktionseinheiten kommunizierenden Satzes (7.1, 15.1 bis 7.N, 15.N) über eine Interface-Baugruppe (3.1-3.M) derart kommunizieren, daß alle Feldbaugruppen dieses Satzes von peripheren Funktionseinheiten ständig Daten empfangen können, und daß im Falle eines Fehlers auf einer Betriebsbaugruppe (7.1-7.N) und mindestens eines funktionsfähigen Ersatzfeldes (2) eine automatische und dezentrale Umschaltung des aktiven Baugruppenfeldes (1) durch alle Interface-Baugruppen (3.1-3.M) auf ein funktionsfähiges Ersatzfeld (2) erfolgt, indem ein Auswahlschalter (=Selektor) (5.1-5.M) in den Interface-Baugruppen (3.1-3.M) betätigt wird.

4. Verfahren zur Ersatzschaltung gemäß einem der voranstehenden Ansprüche 1 bis 3, **dadurch gekennzeichnet, daß** das mindestens eine interne Informationssignal ein fehleranzeigendes Informationsbit (=Equipment Defect Indication Bit = EDI-Bit) enthält.

5. Verfahren zur Ersatzschaltung gemäß einem der voranstehenden Ansprüche 1 bis 4, **dadurch gekennzeichnet, daß** die Feldbaugruppen (7.1-7.N, 15.1-15.N) ihre Fehlfunktion selbst erkennen und gegebenenfalls die fehlererkennende Feldbaugruppe das interne Informationssignal und/oder das EDI-Bit selbst erzeugt.

6. Verfahren zur Ersatzschaltung gemäß einem der voranstehenden Ansprüche 1 bis 5, **dadurch gekennzeichnet, daß** das interne Informationssignal und/oder das EDI-Bit durch die fehlererkennende Feldbaugruppe an mindestens eine weitere Feldbaugruppe des gleichen Baugruppenfeldes (1 oder 2) und deren gegebenenfalls vorhandene Interface-Baugruppe, vorzugsweise alle übrigen Feldbaugruppen (7.1-7.N, 15.1-15.N) des gleichen Baugruppenfeldes und deren Interface-Baugruppen (3.1-3.M), propagiert wird.

7. Verfahren zur Ersatzschaltung gemäß einem der voranstehenden Ansprüche 1 bis 6, **dadurch gekennzeichnet, daß** zumindest in einer Feldbaugruppe, vorzugsweise in jeder Feldbaugruppe (7.1-7.N, 15.1-15.N), vorzugsweise durch einen internen Steuerprozessor (11.1-11.N), die internen Informationssignale über den Fehlerzustand der Feldbaugruppen und/oder mindestens eines Baugruppenfeldes erzeugt und/oder verarbeitet und/oder mit anderen internen Steuerprozessoren (11.1-11.N) kommuniziert werden.

**8.** Verfahren zur Ersatzschaltung gemäß dem voranstehenden Anspruch 7, **dadurch gekennzeichnet, daß** durch den mindestens einen internen Steuerprozessor (11.1-11.N) zumindest eines der folgenden internen Informationssignale erzeugt und/oder verarbeitet und/oder mit anderen internen Steuerprozessoren (11.1-11.N) kommuniziert werden:

- SF (signal fail), welches den Fehlerzustand des empfangenen/gesendeten Ein-/ Ausgangssignals an einem Port (12) mit den möglichen Werten {1, 0} bezeichnet;
- RxEDI (received EDI), welches das empfangene EDI-Bit an einem Port (12) mit den möglichen Werten {1, 0} bezeichnet;
- TxEDI (transmitted EDI), welches das gesendete EDI-Bit an einem Port (12) mit den möglichen Werten {1, 0} bezeichnet;
- EQF (equipment failure), welches einen internen Fehlerzustand auf der Feldbaugruppe mit den möglichen Werten {1, 0} bezeichnet, der durch eine baugruppenspezifische Überwachung unterschiedlicher Ausfallsensoren auf der Feldbaugruppe ermittelt wird;
- CardFail, welches eine Fehlernotifikation an einen zentralen Steuerprozessor (18) bezeichnet.

**9.** Verfahren zur Ersatzschaltung gemäß einem der voranstehenden Ansprüche 1 bis 8, **dadurch gekennzeichnet, daß** das Setzen eines/des Informationsbits TxEDI(i) am Port i (12) gemäß der folgenden logischen Oder-Gleichung:

$$TxEDI(i)_{i=1..L} := \cup \{RxEDI(n)\}_{n=1..L,\, n \neq i} \cup \{SF(n)\}_{n=1..P} \cup EQF$$

erfolgt.

**10.** Verfahren zur Ersatzschaltung gemäß einem der voranstehenden Ansprüche 1 bis 9, **dadurch gekennzeichnet, daß** das Setzen eines/des Informationsbits TxEDI(Q) am Port Q (12) gemäß der folgenden logischen Oder-Gleichung:

$$TxEDI(Q) := \cup \{RxEDI(n)\}_{n=1..L} \cup \{SF(n)\}_{n=1..P,Q} \cup EQF$$

erfolgt.

**11.** Verfahren zur Ersatzschaltung gemäß einem der voranstehenden Ansprüche 2 bis 10, **dadurch gekennzeichnet, daß** der lokale Fehlerzustand CardFail, der mit der entsprechenden Notifikation an den zentralen Steuerprozessor (18) gesendet wird, sich gemäß der folgenden logischen Oder-Gleichung:

$$CardFail := \cup \{SF(n)\}_{n=1..P} \cup EQF$$

bestimmt.

**12.** Verfahren zur Ersatzschaltung gemäß einem der voranstehenden Ansprüche 1 bis 11, **dadurch gekennzeichnet, daß** die Interface-Baugruppen (3.1-3.M) je eine Funktionseinheit, vorzugsweise einen lokalen Steuerprozessor (13) mit einem Funktionsblock "Selector control" (14), aufweisen, der die Umschaltung zwischen den einzelnen Baugruppenfeldern (1, 2) im Fehlerfall kontrolliert, wobei aus den eingehenden Informationsbits SF(X), SF(Y), RxEDI(X), RxEDI(Y) und einem SwitchControl-Befehl, vorzugsweise vom zentralen Steuerprozessor (18), die einzustellende Position der Auswahlschalter (Selektor) (5.1-5.M) bestimmt wird.

**13.** Verfahren zur Ersatzschaltung gemäß dem voranstehenden Anspruch 12, **dadurch gekennzeichnet, daß** die einzustellende Position des Auswahlschalters (Selektor) (5.1-5.M) gemäß dem nachfolgenden Entscheidungsverfahren getroffen wird, sobald eine beliebige Änderung des Fehlerzustands (=Änderung eines Informationsbits SF (X), SF(Y), RxEDI(X), RxEDI(Y)) festzustellen ist:

falls kein automatisches Umschalten erlaubt ist (Switch-Control=Forced-<X,Y>), wird die vom zentralen Steuerprozessor verlangte Position (X oder Y) des Selektors zwangsweise eingestellt, anderenfalls (Switch-Control=Auto-<X,Y>) wird aufgrund der bestehenden SF und RxEDI-Zustände nach vier Fällen unterschieden:

Fall a: Wird kein Fehlerzustand angezeigt, so wird die vom zentralen Steuerprozessor (18) verlangte Vorzugsposition (X oder Y) des Selektors (5.1-5.M) eingestellt;

Fall b: Wird das Baugruppenfeld X als fehlerhaft und das Baugruppenfeld Y als fehlerfrei angezeigt, wird die Position Y des Selektors (5.1-5.M) eingestellt;

Fall c: Wird das Baugruppenfeld Y als fehlerhaft und das Baugruppenfeld X als fehlerfrei angezeigt, wird die Position X des Selektors (5.1-5.M) eingestellt;

Fall d: Werden beide Baugruppenfelder X und Y als fehlerhaft angezeigt, wird die momentane Position des Selektors (5.1-5.M) beibehalten.

**14.** Verfahren zur Ersatzschaltung gemäß einem der voranstehenden Ansprüche 2 bis 13, **dadurch gekennzeichnet, daß** zwischen dem zentralen Steuerprozessor (18) und den einzelnen Feldbaugruppen (7.1-8.N, 15.1-15.N) und den Interface-Baugruppen (3.1-3.M) zumindest eines der folgenden internen Informationssignale ausgetauscht wird:

CardFail, welches eine Fehlernotifikation mit den möglichen Werten {1, 0} von einer Feldbaugruppe an den zentralen Steuerprozessor bezeichnet, mit der ein lokal festgestellter Baugruppenfehler angezeigt wird, der Anlaß zur Auslösung einer Ersatzschaltung ist;

SwitchIndication, welches eine Notifikation mit den möglichen Werten {Xarray, Yarray} einer Interface-Baugruppe (3.1-3.M) an den zentralen Steuerprozessor (18) bezeichnet, mit der eine erfolgte Umschaltung auf ein anderes Baugruppenfeld (1, 2) angezeigt wird;

SwitchRequest, welches einen Abfragebefehl des zentralen Steuerprozessors (18) an eine Interface-Baugruppe (3.1-3.M) über deren Schaltzustand bezeichnet, der durch Aussendung des aktuellen Wertes von SwitchIndication an den zentralen Steuerprozessor (18) beantwortet wird;

SwitchControl, welches einen Steuerparameter mit den möglichen Werten (Forced-X, Forced-Y, Auto-X, Auto-Y} des zentralen Steuerprozessors (18) an eine Interface-Baugruppe (3.1-3.M) bezeichnet, mit dem ein Selektor (5.1-5.M) der Interface-Baugruppe entweder fest auf ein bestimmtes Baugruppenfeld (1, 2) geschaltet werden kann, oder eine bestimmte Vorzugslage des Selektors (5.1-5.M) eingestellt werden kann, mit der Erlaubnis zum automatischen Umschalten im Falle eines erkannten Fehlers, wobei die einzelnen Werte bedeuten:

Forced-X: Selektor liegt fest auf dem X-Feld, automatische Umschaltung ist nicht möglich;
Forced-Y: Selektor liegt fest auf dem Y-Feld, automatische Umschaltung ist nicht möglich;
Auto-X: Selektor liegt vorzugsweise auf dem X-Feld, automatische Umschaltung ist möglich;
Auto-Y: Selektor liegt vorzugsweise auf Y-Feld, automatische Umschaltung ist möglich.

**15.** Verfahren zur Ersatzschaltung gemäß einem der voranstehenden Ansprüche 2 bis 14, **dadurch gekennzeichnet, daß** die Steuerung der Ersatzschaltung durch den zentralen Steuerprozessor (18), vorzugsweise sich wiederholend bei Ablauf eines Halte-Timers, gemäß der nachfolgenden Logikauswahl bestimmt wird:

Fall a: Wird der fehlerfreie Zustand beider Baugruppenfelder festgestellt, so wird das aktuell selektierte Baugruppenfeld beibehalten und, falls der Halte-Timer abgelaufen ist, das automatische Umschalten durch SwitchControl = Auto-(X|Y) wieder freigegeben;

Fall b: Wurde ein Fehler in dem selektierten Betriebsfeld festgestellt, so wird vom zentralen Steuerprozessor an alle Interface-Baugruppen ein Schaltbefehl SwitchControl = Forced-(X|Y) zur zwangsweisen Selektion des bisherigen Ersatzfeldes gesendet, weiterhin wird ein Halte-Timer (hold-off timer), vorzugsweise im Minutenbereich, gestartet, der eine zeitliche Hysterese vor einer Möglichkeit einer erneuten Umschaltung sicherstellt, so daß kein schnell oszillierendes Schaltverhalten auftreten kann;

Fall c: Wurde ein Fehler im Ersatzfeld festgestellt, so wird vom zentralen Steuerprozessor an alle Interface-Baugruppen ein Schaltbefehl SwitchControl = Forced-(X|Y) zur zwangsweisen Selektion des Betriebsfelds gesendet und damit ein Umschalten einzelner Interface-Baugruppen auf das fehlerhafte Ersatzfeld verhindert.

**16.** Ersatzschaltung in einem digitalen Datenübertragungssystem mit mindestens zwei Baugruppenfeldern (1, 2), mit einem Betriebsfeld (1) und mindestens einem Ersatzfeld (2), wobei jedes Baugruppenfeld (1, 2) aus einer Vielzahl von Feldbaugruppen (7.1-7.N, 15.1-15.N) aufgebaut ist und jede Feldbaugruppe (7.1-7.N) des Betriebsfeldes (1) eine funktionale Entsprechung (15.1-15.N) in dem mindestens einen Ersatzfeld (2) aufweist und mit der Feldbaugruppe (7.1-7.N) des Betriebsfeldes einen Feldbaugruppensatz bildet, weiterhin einer Vielzahl von Interface-Baugruppen (3.1-3.M), wobei jede Interface-Baugruppe (3.1-3.M) über einen Dateneingang und einen Datenausgang (20.1-20.M) zu peripheren Funktionseinheiten, eine Brücke (4.1-4.M) zur parallelen Übermittlung aller Eingangsdaten an alle Feldbaugruppen des zugeordneten Feldbaugruppensatzes und einen Auswahlschalter (Selektor) (5.1-5.M) zur Bestimmung des Baugruppenfeldes, aus dem die Daten an den Datenausgang (21.1-21.M) der Interface-Baugruppe (3.1-3.M) weitergeleitet wird, verfügt, **dadurch gekennzeichnet, daß** jede Feldbaugruppe (7.1-7.N, 15.1-15.N) eines Baugruppenfeldes (1, 2) Mittel zur Fehlerdetektion (13) und zur Fehlerpropagierung (11) zu den restlichen Feldbaugruppen (7.1-7.N, 15.1-15.N) und zu den gegebenenfalls zugeordneten Interface-Baugruppen (3.1-3.M) aufweist.

**17.** Ersatzschaltung gemäß dem voranstehenden Anspruch 16, **dadurch gekennzeichnet, daß** alle Feldbaugruppen (7.1-7.N, 15.1-15.N) eines Baugruppenfeldes (1, 2) untereinander und mit den Interface-Baugruppen (3.1-3.M) durch Fehlerpropagierungspfade (10) verbunden sind, wobei die Mittel zur Fehlerdetektion (13) und Fehlerpropagierung (11) im Falle eines detektierten Fehlers ein fehleranzeigendes Informationsbit (=EDI-Bit) erzeugen können und mittelbar oder unmittelbar die anderen Feldbaugruppen (7.1-7.N, 15.1-15.N) seines Feldes (1, 2) vom Auftreten des Fehlers informieren können.

**18.** Ersatzschaltung gemäß einem der voranstehenden Ansprüche 16 bis 17, **dadurch gekennzeichnet, daß** jede Feldbaugruppe (7.1-7.N, 15.1-15.N), die eine zugeordnete Interface-Baugruppe (3.1-3.M) aufweist, ein Mittel zur Betätigung (14) des Auswahlschalters (Selektors) (5.1-5.M) ihrer Interface-Baugruppe (3.1-3.M) aufweist, um eine Umschaltung des baugruppenfeldseitigen Eingangs (21.1-21.M) der Interface-Baugruppe (3.1-3.M) zu initialisieren.

**19.** Ersatzschaltung gemäß einem der voranstehenden Ansprüche 16 bis 18, **dadurch gekennzeichnet, daß** jedes Baugruppenfeld (1, 2) eine auswechselbare Baueinheit des Datenübertragungssystems bildet.

**20.** Ersatzschaltung gemäß einem der voranstehenden Ansprüche 16 bis 19, **dadurch gekennzeichnet, daß** die Baugruppenfelder (1, 2) und die Interface-Baugruppen (3.1-3.M) eine weitere auswechselbare Baueinheit des Datenübertragungssystems bilden.

**21.** Ersatzschaltung gemäß einem der voranstehenden Ansprüche 16 bis 18, **dadurch gekennzeichnet, daß** die oben genannten funktionalen Mittel zumindest teilweise durch mindestens ein Programmodul und mindestens einen zugeordneten Prozessor realisiert sind.

**Claims**

**1.** A method for changing over to an equivalent circuit of a digital data transmission system which is at least partially redundant, said system having an assembly which consists of at least two subassembly arrays (1, 2) comprising in each case an identical multiplicity of N array modules (7.1-7.N, 15.1-15.N) and M interface modules (3.1-3.M), wherein each interface module (3.1-3.M) provides communication coordination between a set of identical array modules (7.1, 15.1 to 7.N, 15.N) on the subassembly arrays (1, 2) and at least one peripheral function unit, wherein in the event of an error on an active subassembly array, which is called an operational array (1) and has N operational modules (7.1-7.N), it is possible to switch equivalently to another error-free subassembly array, which is called an equivalent array (2) and has N equivalent modules (15.1-15.N), **characterized in that** this switching is initialized locally by at least one internal information signal from the defective operational module (7.1-7.N), wherein the internal information signal is propagated to at least one further array module of the same subassembly array (1 or 2).

**2.** The method for changing over to an equivalent circuit as claimed in the preceding Claim 1, **characterized in that** a central control processor (18) additionally monitors the switching of the subassembly arrays (1, 2) for the purpose of process integrity.

**3.** The method for changing over to an equivalent circuit as claimed in one of the preceding Claims 1 to 2, **characterized in that** at least two array modules of a set (7.1, 15.1 to 7.N, 15.N), which set communicates with peripheral function units, communicate via an interface module (3.1-3.M) in such a way that all array modules of this set can constantly receive data from peripheral function units, and that if there is an error on an operational module (7.1-7.N) and at least one functioning equivalent array (2), an automatic and local switching of the active subassembly array (1) to a functioning equivalent array (2) is performed by all interface modules (3.1-3.M) by activating a selection switch (selector) (5.1-5.M) in the interface modules (3.1-3.M).

4. The method for changing over to an equivalent circuit as claimed in one of the preceding Claims 1 to 3, **characterized in that** the internal information signal, of which there is at least one, contains an error-indicating information bit (= Equipment Defect Indication bit = EDI bit).

5. The method for changing over to an equivalent circuit as claimed in one of the preceding Claims 1 to 4, **characterized in that** the array modules (7.1-7.N, 15.1-15.N) themselves recognize their malfunction and, if applicable, the error-recognizing array module itself generates the internal information signal and/or the EDI bit.

6. The method for changing over to an equivalent circuit as claimed in one of the preceding Claims 1 to 5, **characterized in that** the internal information signal and/or the EDI bit is propagated by the error-recognizing array module to at least one further array module of the same subassembly array (1 or 2) and its interface module if available, and preferably to all remaining array modules (7.1-7.N, 15.1-15.N) of the same subassembly array and their interface modules (3.1-3.M).

7. The method for changing over to an equivalent circuit as claimed in one of the preceding Claims 1 to 6, **characterized in that** in at least one array module, preferably in every array module (7.1-7.N, 15.1-15.N), preferably by means of an internal control processor (11.1-11.N), the internal information signals concerning the error status of the array modules and/or at least one subassembly array are generated and/or processed and/or communicated with other internal control processors (11.1-11.N).

8. The method for changing over to an equivalent circuit as claimed in the preceding Claim 7, **characterized in that** at least one of the following internal information signals is generated and/or processed and/or communicated with other internal control processors (11.1-11.N) by the internal control processor (11.1-11.N), of which there is at least one:

   - SF (signal fail), which designates the error status of the received/sent input/output signal at a port (12) with the possible values {1, 0};
   - RxEDI (received EDI), which designates the received EDI bit at a port (12) with the possible values {1, 0};
   - TxEDI (transmitted EDI), which designates the sent EDI bit at a port (12) with the possible values {1, 0};
   - EQF (equipment failure), which designates an internal error status on the array module with the possible values {1, 0}, said error status being determined by means of a module-specific monitoring of different failure sensors on the array module;
   - CardFail, which designates an error notification to a central control processor (18).

9. The method for changing over to an equivalent circuit as claimed in one of the preceding Claims 1 to 8, **characterized in that** the setting of a/the information bit TxEDI(i) at the port i (12) takes place in accordance with the following logical OR equation:

$$\text{TxEDI}(i)_{i=1..L} := \cup \{\text{RxEDI}(n)\}_{n=1..L,\, n \neq i} \cup \{\text{SF}(n)\}_{n=1..P} \cup \text{EQF}.$$

10. The method for changing over to an equivalent circuit as claimed in one of the preceding Claims 1 to 9, **characterized in that** the setting of a/the information bit TxEDI(Q) at the port Q (12) takes place in accordance with the following logical OR equation:

$$\text{TxEDI}(Q) := \cup \{\text{RxEDI}(n)\}_{n=1..L} \cup \{\text{SF}(n)\}_{n=1..P,Q} \cup \text{EQF}.$$

11. The method for changing over to an equivalent circuit as claimed in one of the preceding Claims 2 to 10, **characterized in that** the local error status CardFail, which is sent with the corresponding notification to the central control processor (18), is determined in accordance with the following logical OR equation:

$$\text{CardFail} := \cup \{\text{SF}(n)\}_{n=1..P} \cup \text{EQF}.$$

12. The method for changing over to an equivalent circuit as claimed in one of the preceding Claims 1 to 11, **characterized in that** the interface modules (3.1-3.M) each have a function unit, preferably a local control processor (13) with a function block "Selector control" (14), which controls the switching between the individual subassembly arrays (1, 2) in case of error, wherein the incoming information bits SF(X), SF(Y), RxEDI(X), RxEDI(Y) and a SwitchControl command, preferably from the central control processor (18), are used to determine the position which must be set for the selection switch (selector) (5.1-5.M).

**13.** The method for changing over to an equivalent circuit as claimed in the preceding Claim 12, **characterized in that** the position which must be set for the selection switch (selector) (5.1-5.M) is established in accordance with the following decision method as soon as any change is ascertained in the error status (= change of an information bit SF(X), SF(Y), RxEDI(X), RxEDI(Y)):

> if automatic switching is not allowed (SwitchControl=Forced-<X,Y>), the position (X or Y) which is set for the selector must be that requested by the central control processor, otherwise (SwitchControl=Auto-<X,Y>) four cases are distinguished on the basis of the existing SF and RxEDI statuses:

>> Case a: if no error status is indicated, the position (X or Y) of the selector (5.1-5.M) is set to the preferred position as requested by the central control processor (18);
>> Case b: if the subassembly array X is indicated as defective and the subassembly array Y as error-free, the position Y of the selector (5.1-5.M) is set;
>> Case c: if the subassembly array Y is indicated as defective and the subassembly array X as error-free, the position X of the selector (5.1-5.M) is set;
>> Case d: if both subassembly arrays X and Y are indicated as defective, the current position of the selector (5.1-5.M) is retained.

**14.** The method for changing over to an equivalent circuit as claimed in one of the preceding Claims 2 to 13, **characterized in that** at least one of the following internal information signals is exchanged between the central control processor (18) and the individual array modules (7.1-8.N, 15.1-15.N) and the interface modules (3.1-3.M):

> CardFail, which designates an error notification with the possible values {1, 0} from an array module to the central control processor, said notification indicating a locally detected module error which is cause for triggering an equivalent circuit;
> SwitchIndication, which designates a notification with the possible values {Xarray, Yarray} from an interface module (3.1-3.M) to the central control processor (18), said notification indicating a completed switching to another subassembly array (1, 2);
> SwitchRequest, which designates a request command from the central control processor (18) to an interface module (3.1-3.M) concerning its switching status, said request command being answered by sending the current value of SwitchIndication to the central control processor (18);
> SwitchControl, which designates a control parameter with the possible values {Forced-X, Forced-Y, Auto-X, Auto-Y} from the central control processor (18) to an interface module (3.1-3.M), which control parameter either allows a selector (5.1-5.M) of the interface module to be permanently switched to a specific subassembly array (1, 2) or allows a specific preferred position of the selector (5.1-5.M) to be set with the authorization for automatic switching in the case of a recognized error, wherein the individual values signify:

>> Forced-X: selector is permanently set to the X-array, automatic switching is not possible;
>> Forced-Y: selector is permanently set to the Y-array, automatic switching is not possible;
>> Auto-X: selector is preferably set to the X-array, automatic switching is possible;
>> Auto-Y: selector is preferably set to the Y-array, automatic switching is possible.

**15.** The method for changing over to an equivalent circuit as claimed in one of the preceding Claims 2 to 14, **characterized in that** the control of the changeover to an equivalent circuit is specified by the central control processor (18), preferably repeatedly upon expiry of a hold-off timer, in accordance with the following logic selection:

> Case a: if the error-free status of both subassembly arrays is detected, the currently selected subassembly array is retained and, if the hold-off timer has expired, the automatic switching is enabled again by Switch-Control = Auto-(X|Y);
> Case b: if an error was detected in the selected operational array, a switching command SwitchControl = Forced-(X|Y) is sent from the central control processor to all interface modules for mandatory selection of the previous equivalent array, and furthermore a hold-off timer, which is preferably measured in minutes, is started and ensures a timed hysteresis before further switching is possible, thereby preventing the occurrence of a rapidly oscillating switching effect;

Case c: if an error was detected in the equivalent array, a switching command SwitchControl = Forced-(X|Y) is sent from the central control processor to all interface modules for mandatory selection of the operational array, thereby preventing a switching of individual interface modules to the defective equivalent array.

16. An equivalent circuit in a digital data transmission system having at least two subassembly arrays (1, 2), including an operational array (1) and at least one equivalent array (2), wherein each subassembly array (1, 2) comprises a multiplicity of array modules (7.1-7.N, 15.1-15.N), each array module (7.1-7.N) of the operational array (1) having a functional correspondence (15.1-15.N) in the equivalent array, of which there is at least one (2), and forming an array module set with the array module (7.1-7.N) of the operational array, and additionally a multiplicity of interface modules (3.1-3.M), wherein each interface module (3.1-3.M) has a data input and a data output (20.1-20.M) to peripheral function units, a bridge (4.1-4.M) for the parallel transfer of all input data to all array modules of the assigned array module set and a selection switch (selector) (5.1-5.M) for specifying the subassembly array from which the data is forwarded to the data output (21.1-21.M) of the interface module (3.1-3.M), **characterized in that** each array module (7.1-7.N, 15.1-15.N) of a subassembly array (1, 2) has means for error detection (13) and for error propagation (11) to the remaining array modules (7.1-7.N, 15.1-15.N) and to the interface modules (3.1-3.M) which have been assigned if applicable.

17. The equivalent circuit as claimed in the preceding Claim 16, **characterized in that** all array modules (7.1-7.N, 15.1-15.N) of a subassembly array (1, 2) are connected to each other and to the interface modules (3.1-3.M) by means of error propagation paths, wherein the means for error detection (13) and error propagation (11) can generate an error-indicating information bit (= EDI bit) in the event of a detected error, and can indirectly or directly notify the other array modules (7.1-7.N, 15.1-15.N) in its array (1, 2) of the occurrence of the error.

18. The equivalent circuit as claimed in one of the preceding Claims 16 to 17, **characterized in that** each array module (7.1-7.N, 15.1-15.N) having an assigned interface module (3.1-3.M) has a means for activating (14) the selection switch (selector) (5.1-5.M) of its interface module (3.1-3.M), in order to initialize a switching of the input (21.1-21.M) on the subassembly array side of the interface module (3.1-3.M).

19. The equivalent circuit as claimed in one of the preceding Claims 16 to 18, **characterized in that** each subassembly array (1, 2) forms an exchangeable assembly of the data transmission system.

20. The equivalent circuit as claimed in one of the preceding Claims 16 to 19, **characterized in that** the subassembly arrays (1, 2) and the interface modules (3.1-3.M) form a further exchangeable assembly of the data transmission system.

21. The equivalent circuit as claimed in one of the preceding Claims 16 to 18, **characterized in that** the above mentioned functional means are implemented at least partially by means of at least one program module and at least one assigned processor.

## Revendications

1. Procédé de passage à un réseau équivalent d'un système au moins partiellement redondant de transmission numérique de données avec un ensemble constitué au moins de deux champs de sous-ensembles (1, 2) composés chacun d'une même pluralité de N sous-ensembles de champ (7.1-7.N, 15.1-15.N) et de M sous-ensembles d'interface (3.1-3.M), dans lequel chaque sous-ensemble d'interface (3.1-3.M) sert à coordonner la communication entre un groupe de sous-ensembles de champ identiques (7.1, 15.1 à 7.N, 15.N) sur les champs de sous-ensembles (1, 2) et au moins une unité fonctionnelle périphérique et dans lequel en cas de défaut sur un champ actif de sous-ensembles, appelé champ fonctionnel (1) avec N sous-ensembles fonctionnels (7.1, 7.N), il est possible, à titre de remplacement, de commuter sur un autre champ de sous-ensembles sans défaut, appelé champ de remplacement (2) avec N sous-ensembles de remplacement (15.1-15.N), **caractérisé en ce que** cette commutation est initialisée par au moins un signal d'information interne issu du sous-ensemble fonctionnel défectueux (7.1-7.N), ledit signal d'information interne étant propagé à au moins un autre sous-ensemble de champ du même champ de sous-ensembles (1 ou 2).

2. Procédé de passage à un réseau équivalent selon la précédente revendication 1, **caractérisé en ce que** pour sécuriser le processus, un processeur de commande central (18) surveille en plus la commutation des champs de sous-ensembles (1, 2).

**3.** Procédé de passage à un réseau équivalent selon l'une des précédentes revendications 1 à 2, **caractérisé en ce qu'**au moins deux sous-ensembles de champ d'un groupe (7.1, 15.1 à 7.N, 15.N) communicant avec des unités fonctionnelles périphériques communiquent via un sous-ensemble d'interface (3.1-3.M) de telle manière que tous les sous-ensembles de champ de ce groupe puissent recevoir en permanence des données desdites unités fonctionnelles périphériques et **en ce qu'**en présence d'un défaut sur un sous-ensemble fonctionnel (7.1-7.N) et au moins d'un champ de remplacement (2) opérationnel, une commutation automatique et décentralisée du champ actif de sous-ensembles (1) à travers tous les sous-ensembles d'interface (3.1-3.M) sur un champ de remplacement opérationnel (2) a lieu en actionnant un commutateur de sélection (=sélecteur) (5.1-5.M) dans les sous-ensembles d'interface (3.1-3.M).

**4.** Procédé de passage à un réseau équivalent selon l'une des précédentes revendications 1 à 3, **caractérisé en ce que** ledit au moins un signal d'information interne contient un bit d'information indicateur de défaut (=Equipment Defect Indication Bit = bit EDI).

**5.** Procédé de passage à un réseau équivalent selon l'une des précédentes revendications 1 à 4, **caractérisé en ce que** les sous-ensembles de champ (7.1-7.N, 15.1-15.N) détectent eux-mêmes leur dysfonctionnement et que, le cas échéant, le sous-ensemble de champ ayant détecté le défaut génère lui-même le signal d'information interne et/ou le bit EDI.

**6.** Procédé de passage à un réseau équivalent selon l'une des précédentes revendications 1 à 5, **caractérisé en ce que** le signal d'information interne et/ou le bit EDI est propagé par le sous-ensemble de champ ayant détecté le défaut à au moins un autre sous-ensemble de champ du même champ de sous-ensembles (1 ou 2) et son sous-ensemble d'interface éventuellement existant, de préférence à tous les autres sous-ensembles de champ (7.1-7.N, 15.1-15.N) du même champ de sous-ensembles et leurs sous-ensembles d'interface (3.1-3.M).

**7.** Procédé de passage à un réseau équivalent selon l'une des précédentes revendications 1 à 6, **caractérisé en ce qu'**au moins dans un des sous-ensembles de champ, de préférence dans chaque sous-ensemble de champ (7.1-7.N, 15.1-15.N), les signaux d'information internes concernant l'état de défaut des sous-ensembles de champ et/ou au moins d'un champ de sous-ensembles sont générés et/ou traités de préférence par un processeur de commande interne (11.1-11.N) et/ou communiqués avec d'autres processeurs de commande internes (11.1-11.N).

**8.** Procédé de passage à un réseau équivalent selon la précédente revendication 7, **caractérisé en ce que** grâce audit au moins un processeur de commande interne (11.1-11.N) au moins l'un des signaux d'information internes suivants est généré et/ou traité par ledit et/ou communiqué avec d'autres processeurs de commande internes (11.1-11.N) :

- SF (signal fail), lequel désigne l'état de défaut du signal d'entrée/sortie reçu/émis sur un port (12) avec les possibles valeurs {1, 0} ;
- RxEDI (received EDI), lequel désigne le bit EDI reçu sur un port (12) avec les possibles valeurs {1, 0} ;
- TxEDI (transmitted EDI), lequel désigne le bit EDI émis sur un port (12) avec les possibles valeurs {1, 0} ;
- EQF (equipment failure), lequel désigne un état de défaut interne sur le sous-ensemble de champ avec les possibles valeurs {1, 0}, qui est détecté, pour chaque sous-ensemble, par une surveillance de différents capteurs de détection de défaillance sur le sous-ensemble de champ ;
- CardFail, lequel désigne une notification de défaut à un processeur de commande central (18).

**9.** Procédé de passage à un réseau équivalent selon l'une des précédentes revendications 1 à 8, **caractérisé en ce que** le positionnement d'un/du bit d'information TxEDI (i) au port i (12) s'effectue suivant l'équation OU logique suivante :

$$\text{TxEDI (i)}_{i=1..L} := \cup \{\text{RxEDI (n)}\}_{n=1..L,\, n \neq i} \cup \{\text{SF (n)}\}_{n=1..P} \cup \text{EQF.}$$

**10.** Procédé de passage à un réseau équivalent selon l'une des précédentes revendications 1 à 9, **caractérisé en ce que** le positionnement d'un/du bit d'information TxEDI (Q) au port Q (12) s'effectue suivant l'équation OU logique suivante :

$$\text{TxEDI(Q)} := \cup \{\text{RxEDI(n)}\}_{n=1..L} \cup \{\text{SF(n)}\}_{n=1..P,Q} \cup \text{EQF.}$$

**11.** Procédé de passage à un réseau équivalent selon l'une des précédentes revendications 2 à 10, **caractérisé en ce que** l'état de défaut local CardFail envoyé avec la notification correspondante au processeur de commande central (18) se détermine suivant l'équation OU logique suivante :

$$\text{CardFail} := \cup \, \{ \text{SF (n)} \}_{n=1..P} \cup \text{EQF}.$$

**12.** Procédé de passage à un réseau équivalent selon l'une des précédentes revendications 1 à 11, **caractérisé en ce que** les sous-ensembles d'interface (3.1-3.M) comportent chacun une unité fonctionnelle, de préférence un processeur de commande local (13) doté d'un bloc fonctionnel "selector control" (14) qui contrôle la commutation entre les différents champs de sous-ensembles (1, 2) en cas de défaut, la position du commutateur de sélection (sélecteur) (5.1-5.M) étant déterminée à partir des bits d'information entrants SF (X), SF (Y), RxEDI (X), RxEDI (Y) et d'un ordre SwitchControl, de préférence par le processeur de commande central (18).

**13.** Procédé de passage à un réseau équivalent selon la précédente revendication 12, **caractérisé en ce que** la position du commutateur de sélection (sélecteur) (5.1-5.M) est sélectionnée selon la procédure de décision suivante dès lors que l'on constate un quelconque changement de l'état de défaut (=changement d'un bit d'information SF (X), SF (Y), RxEDI (X), RxEDI (Y) :

si une commutation automatique n'est pas autorisée (SwitchControl=Forced-<X, Y>), la position (X ou Y) du sélecteur requise par le processeur de commande central est obligatoirement sélectionnée, autrement (SwitchControl=Auto-<X, Y>), en raison des états actuels de SF et de RxEDI, il est différencié selon quatre cas :

Cas a : si aucun état de défaut n'est signalé, la position préférée (X ou Y) du sélecteur (5.1-5.M) requise par le processeur de commande central (18) est sélectionnée ;
Cas b : si le champ de sous-ensembles X est signalé comme défectueux et le champ de sous-ensembles Y comme sans défaut, la position Y du sélecteur (5.1-5.M) est sélectionnée ;
Cas c : si le champ de sous-ensembles Y est signalé comme défectueux et le champ de sous-ensembles X comme sans défaut, la position X du sélecteur (5.1-5.M) est sélectionnée ;
Cas d : si les deux champs de sous-ensembles X et Y sont signalés comme défectueux, la position instantanée du sélecteur (5.1, 5.M) est conservée.

**14.** Procédé de passage à un réseau équivalent selon l'une des précédentes revendications 2 à 13, **caractérisé en ce qu'**entre le processeur de commande central (18) et les différents sous-ensembles de champ (7.1-8.N, 15.1-15.N) et sous-ensembles d'interface (3.1-3.M), au moins un des signaux d'information internes suivants est échangé :

CardFail, lequel désigne une notification de défaut avec les possibles valeurs {1, 0} d'un sous-ensemble de champ à destination du processeur de commande central, notification servant à signaler un défaut du sous-ensemble, déterminé localement et donnant lieu au déclenchement d'un réseau équivalent ;
SwitchIndication, lequel désigne une notification avec les possibles valeurs (Xarray, Yarray) d'un sous-ensemble d'interface (3.1-3.M) à destination du processeur de commande central (18) servant à signaler une commutation accomplie sur un autre champ de sous-ensembles (1, 2) ; SwitchRequest, lequel désigne un ordre d'interrogation du processeur de commande central (18) à un sous-ensemble d'interface (3.1-3.M) sur l'état de commutation de celui-ci, ordre auquel il est répondu par l'envoi de la valeur actuelle de SwitchIndication au processeur de commande central (18);
SwitchControl, lequel désigne un paramètre de commande avec les possibles valeurs (Forced-X, Forced-Y, Auto-X, Auto-Y) du processeur de commande central (18) à destination d'un sous-ensemble d'interface (3.1-3.M), permettant ou de commuter définitivement un sélecteur (5.1-5.M) sur un certain champ de sous-ensembles (1, 2) ou de régler une certaine position préférée du sélecteur (5.1-5.M) avec l'autorisation d'une commutation automatique si un défaut est détecté, les différentes valeurs signifiant :

Forced-X : le sélecteur est fixé sur le champ X, une commutation automatique n'est pas possible ;
Forced-Y : le sélecteur est fixé sur le champ Y, une commutation automatique n'est pas possible ;
Auto-X : le sélecteur est placé de préférence sur le champ X, une commutation automatique est possible ;
Auto-Y : le sélecteur est placé de préférence sur le champ Y, une commutation automatique est possible.

**15.** Procédé de passage à un réseau équivalent selon l'une des précédentes revendications 2 à 14, **caractérisé en**

**ce que** la commande du réseau équivalent par le processeur de commande central (18), de préférence de manière répétitive en cas d'expiration d'un timer de maintien, est déterminée selon la sélection logique suivante :

Cas a : si on constate un état sans défaut des deux champs de sous-ensembles, le champ de sous-ensembles actuellement sélectionné est conservé et, si le timer de maintien est expiré, la commutation automatique par SwitchControl = Auto-(X|Y) est de nouveau autorisée ;

Cas b : si un défaut a été constaté dans le champ fonctionnel sélectionné, un ordre de commutation Switch-Control = Forced- (X|Y) est envoyé par le processeur de commande central à tous les sous-ensembles d'interface afin de sélectionner obligatoirement le champ de remplacement utilisé jusqu'à présent, puis un timer de maintien (hold-off timer), de préférence dans la gamme des minutes est mis en route, qui garantit une hystérésis dans le temps avant la possibilité d'une nouvelle commutation de manière à empêcher tout comportement de commutation à oscillation rapide ;

Cas c : si un défaut a été constaté dans le champ de remplacement, un ordre de commutation SwitchControl = Forced- (X|Y) est envoyé par le processeur de commande central à tous les sous-ensembles d'interface afin de sélectionner obligatoirement le champ fonctionnel, ce qui empêche une commutation de certains sous-ensembles d'interface sur le champ de remplacement défectueux.

16. Réseau équivalent dans un système numérique de transmission de données avec au moins deux champs de sous-ensembles (1, 2) comprenant un champ fonctionnel (1) et au moins un champ de remplacement (2), chaque champ de sous-ensembles (1, 2) étant constitué d'une pluralité de sous-ensembles de champ (7.1-7.N, 15.1-15.N) et chaque sous-ensemble de champ (7.1-7.N) du champ fonctionnel (1) ayant une équivalence fonctionnelle (15.1-15.N) dans ledit au moins un champ équivalent (2) et formant avec le sous-ensemble de champ (7.1-7.N) du champ fonctionnel un groupe de sous-ensembles de champ, et avec une pluralité de sous-ensembles d'interface (3.1-3.M), chaque sous-ensemble d'interface (3.1-3.M) disposant d'une entrée de données et d'une sortie de données (20.1-20.M) vers des unités fonctionnelles périphériques, d'un pont (4.1-4.M) pour la transmission parallèle de toutes les données d'entrée à tous les sous-ensembles de champ du groupe de sous-ensembles de champ associé et d'un commutateur de sélection (sélecteur) (5.1-5.M) pour déterminer le champ de sous-ensembles à partir duquel les données sont retransmises à la sortie de données (21.1-21.M) du sous-ensemble d'interface (3.1-3.M), **caractérisé en ce que** chaque sous-ensemble de champ (7.1-7.N, 15.1-15.N) d'un champ de sous-ensembles (1, 2) possède des moyens de détection de défaut (13) et de propagation de défaut (11) vers le reste des sous-ensembles de champ (7.1-7.N, 15.1-15.N) et vers les sous-ensembles d'interface (3.1-3.M) éventuellement associés.

17. Réseau équivalent selon la précédente revendication 16, **caractérisé en ce que** tous les sous-ensembles de champ (7.1-7.N, 15.1-15.N) d'un champ de sous-ensembles (1, 2) sont reliés entre eux et avec les sous-ensembles d'interface (3.1-3.M) grâce à des chemins de propagation de défaut (10), les moyens de détection de défaut (13) et de propagation de défaut (11), dans le cas d'un défaut détecté, étant aptes à générer un bit d'information indicateur de défaut (=bit EDI) et à informer directement ou indirectement les autres sous-ensembles de champ (7.1-7.N, 15.1-15.N) de son champ (1, 2) de l'apparition du défaut.

18. Réseau équivalent selon l'une des précédentes revendications 16 à 17, **caractérisé en ce que** chaque sous-ensemble de champ (7.1-7.N, 15.1-15.N) possédant un sous-ensemble d'interface (3.1-3.M) associé possède un moyen d'actionnement (14) du commutateur de sélection (sélecteur) (5.1-5.M) de son sous-ensemble d'interface (3.1-3.M) pour initialiser une commutation de l'entrée (21.1-21.M) côté champ de sous-ensembles du sous-ensemble d'interface (3.1-3.M).

19. Réseau équivalent selon l'une des précédentes revendications 16 à 18, **caractérisé en ce que** chaque champ de sous-ensembles (1, 2) forme un ensemble échangeable du système de transmission de données.

20. Réseau équivalent selon l'une des précédentes revendications 16 à 19, **caractérisé en ce que** les champs de sous-ensembles (1, 2) et les sous-ensembles d'interface (3.1-3.M) forment un autre ensemble échangeable du système de transmission de données.

21. Réseau équivalent selon l'une des précédentes revendications 16 à 18, **caractérisé en ce que** les moyens fonctionnels cités ci-dessus sont réalisés au moins en partie par au moins un module de programme et au moins un processeur associé.

Fig. 1

EP 1 266 461 B1

20

# Fig. 2

EP 1 266 461 B1

**Fig. 3**

Ports des
Fehlerpropagierungspfades

Port = Ein-/Ausgang

EP 1 266 461 B1

Fig. 4

18

Schaltkontrollsignal /
SwitchControl

Schaltanzeige /
SwitchIndication

3.x

13

Auswahl Kontrolle /
Selector Control

14

Auswahl /
Select

übertrage
Datenverkehr /
transmit
traffic data

empfange
Datenverkehr /
receive traffic
data

SF

RxEDI

SF

RxEDI

Port X

Port Y

X

Y

23

**Fig. 5**

start
100

101 — change of any SF or RxEDI status or any SwitchControl received /
Änderung eines SF- oder RxEDI-Status
oder Schaltkontrollsignal empfangen

SwitchControl = Auto-<>

decide on SwitchControl /
Entscheidung gemäß
Schalterkontollsignal

102

SwitchControl = Forced-<>

107 — Select array <X,Y>
acc. to Forced-<X,Y>

103
case a:
SF(X)=SF(Y)=0;
RxEDI(X)=RxEDI(Y)=0;

104
case b:
[SF(X)=1 OR
RxEDI(X)=1];
SF(Y)=0;
RxEDI(Y)=0;

105
case c:
[SF(Y)=1 OR
RxEDI(Y)=1];
SF(X)=0;
RxEDI(X)=0;

106
case d:
all other SF, RxEDI
combinations

108
Select array <X,Y>
acc. to Auto-<X,Y>

109
Select array Y

110
Select array X

111
keep currently
selected array

112
selected array changed ?

113
send notification
SwitchIndication

EP 1 266 461 B1

24

## Fig. 6

**Fig. 7**

200 — Initialisation :
ArrayFail(X)=ArrayFail(Y) = 0;
currently selected array = X;
SwitchControl = Auto-X

201 — change of any CardFail status or any SwitchIndication received /
Änderung von Kartenfehler-Status oder Schaltanzeige empfangen

223 — hold-off timer expired /
Halte-Timer abgelaufen

202 — evaluate ArrayFail(X,Y) status

203 — ArrayFail(X,Y) status changed ?   no / yes

204 — currently selected array   X-array selected / Y-array selected

dc=don't care / nicht beachten

205 — case a:
ArrayFail(X) = 0
ArrayFail(Y) = 0

206 — case b:
ArrayFail(X) = 1
ArrayFail(Y) = 0

207 — case c:
ArrayFail(X) = dc
ArrayFail(Y) = 1

208 — case a:
ArrayFail(X) = 0
ArrayFail(Y) = 0

209 — case b:
ArrayFail(X) = 0
ArrayFail(Y) = 1

210 — case c:
ArrayFail(X) = 1
ArrayFail(Y) = dc

211 — hold-off timer expired ?   no / yes

212 — Forced-Y

213 — Forced-X

214 — hold-off timer expired ?   no / yes

215 — Forced-X

216 — Forced-Y

217 — Auto-X

218 — start hold-off timer

219 — currently selected array = Y

220 — Auto-Y

221 — start hold-off timer

222 — currently selected array = X

26